# EUROPEAN PATENT APPLICATION

(11) **EP 4 167 676 A1**
(43) Date of publication of application: **19.04.2023**
(21) Application number: 21821006.0
(22) Date of filing: 10.06.2021
(51) Int. Cl.: H04W 74/08

(54) **DATA TRANSMISSION METHOD AND APPARATUS, TRANSMITTER, RECEIVER, AND STORAGE MEDIUM**

(30) Priority: 12.06.2020 CN 202010538212
(71) Applicant: ZTE Corporation, Shenzhen, Guangdong 518057 (CN)
(72) Inventor: LI, Weimin, Shenzhen, Guangdong 518057 (CN); YUAN, Zhifeng, Shenzhen, Guangdong 518057 (CN); MA, Yihua, Shenzhen, Guangdong 518057 (CN); LI, Zhigang, Shenzhen, Guangdong 518057 (CN)
(74) Representative: Aipex B.V.
(86) International application number: PCT/CN2021/099385
(87) International publication number: WO 2021/249481

(57) **Abstract**

Provided are a data transmission method and apparatus, a transmitter, a receiver and a storage medium. The method includes determining the number N of resource units and corresponding N resource units, where N is an integer greater than or equal to 1; acquiring M data blocks to be transmitted, M is an integer greater than or equal to 1, where each data block of the M data blocks includes information for indicating the number N of resource units and a position of at least one of the N resource units; and transmitting the M data blocks on the N resource units.

## Description

The present application claims priority to Chinese Patent Application No. 202010538212.0 filed with the China National Intellectual Property Administration (CNIPA) on Jun. 12, 2020, the disclosure of which is incorporated herein by reference in its entirety.

### TECHNICAL FIELD

The present application relates to radio communication technologies, for example, to a data transmission method and apparatus, and a transmitter, a receiver, and a storage medium.

### BACKGROUND

For contention-based grant-free transmission, if there is a traffic transmission requirement, transmitters may randomly select resources for transmitting data, for example, select time-frequency resources and pilot, to perform contention access and transmission. Resources selected by different transmitters may collide, thus causing data transmission instability or transmission failure, affecting the reliability and capacity of the data transmission.

### SUMMARY

The present application provides a data transmission method and apparatus, a transmitter, a receiver and a storage medium. The data is transmitted on one or more resource units, and information about the number of the resource units and positions of the resource units is carried in the transmitted data block, so that the receiver performs comprehensive reception and processing, thereby improving the reliability and capacity of the data transmission.

Embodiments of the present application provide a data transmission method applied to a transmitter. The method includes the following.

The number N of resource units and corresponding N resource units are determined, where N is an integer greater than or equal to 1.

M data blocks to be transmitted are acquired, and M is an integer greater than or equal to 1, where each data block of the M data blocks includes information for indicating the number N of resource units and a position of at least one of the N resource units.

The M data blocks are transmitted on the N resource units.

Embodiments of the present application provide a data transmission method applied to a receiver. The method includes the following.

A resource unit to be detected is determined.

Detection is performed on the resource unit to be detected to acquire a first detection result, where the first detection result includes at least one of M data blocks, the first detection result includes information for indicating a number N of resource units used for transmitting the M data blocks and a position of at least one of N resource units, M is an integer greater than or equal to 1, and N is an integer greater than or equal to 1.

Embodiments of the present application further provide a data transmission apparatus. The data transmission apparatus includes a resource determination module, a data block acquisition module and a transmission module.

The resource determination module is configured to determine a number N of resource units and corresponding N resource units, where N is an integer greater than or equal to 1.

The data block acquisition module is configured to acquire M data blocks to be transmitted, and M is an integer greater than or equal to 1, where each data block of the M data blocks includes information for indicating the number N of resource units and a position of at least one of the N resource units.

The transmission module is configured to transmit the M data blocks on the N resource units.

Embodiments of the present application further provide a data transmission apparatus. The data transmission apparatus includes a to-be-detected resource determination module and a detection module.

The to-be-detected resource determination module is configured to determine a resource unit to be detected.

The detection module is configured to perform detection on the resource unit to be detected to acquire a first detection result, where the first detection result includes at least one of M data blocks, the first detection result includes information for indicating a number N of resource units used for transmitting the M data blocks and a position of at least one of N resource units, M is an integer greater than or equal to 1, and N is an integer greater than or equal to 1.

Embodiments of the present application further provide a transmitter. The transmitter includes one or more processors and a storage apparatus which is configured to store one or more programs.

When executed by the one or more processors, the one or more programs cause the one or more processors to perform a data transmission method applied to transmitter.

Embodiments of the present application further provide a receiver. The receiver includes one or more processors and a storage apparatus which is configured to store one or more programs.

When executed by the one or more processors, the one or more programs cause the one or more processors to perform a data transmission method applied to receiver.

Embodiments of the present application further provide a computer-readable storage medium for storing a computer program which, when executed by a processor, causes the processor to perform the preceding data transmission method.

### BRIEF DESCRIPTION OF DRAWINGS

FIG. 1 is a flowchart of a data transmission method according to an embodiment;
FIG. 2A is a schematic diagram of designated bits according to an embodiment;
FIG. 2B is a schematic diagram of designated bits according to another embodiment;
FIG. 2C is a schematic diagram of designated bits according to another embodiment;
FIG. 2D is a schematic diagram of designated bits according to another embodiment;
FIG. 2E is a schematic diagram of designated bits according to another embodiment;
FIG. 2F is a schematic diagram of designated bits according to another embodiment;
FIG. 3A is a schematic diagram of designated bits according to another embodiment;
FIG. 3B is a schematic diagram of designated bits according to another embodiment;
FIG. 3C is a schematic diagram of designated bits according to another embodiment;
FIG. 3D is a schematic diagram of designated bits according to another embodiment;
FIG. 3E is a schematic diagram of designated bits according to another embodiment;
FIG. 3F is a schematic diagram of designated bits according to another embodiment;
FIG. 4A is a schematic diagram of designated bits according to another embodiment;
FIG. 4B is a schematic diagram of designated bits according to another embodiment;
FIG. 4C is a schematic diagram of designated bits according to another embodiment;
FIG. 4D is a schematic diagram of designated bits according to another embodiment;
FIG. 4E is a schematic diagram of designated bits according to another embodiment;
FIG. 4F is a schematic diagram of designated bits according to another embodiment;
FIG. 5A is a schematic diagram of designated bits according to another embodiment;
FIG. 5B is a schematic diagram of designated bits according to another embodiment;
FIG. 5C is a schematic diagram of designated bits according to another embodiment;
FIG. 5D is a schematic diagram of designated bits according to another embodiment;
FIG. 5E is a schematic diagram of designated bits according to another embodiment;
FIG. 5F is a schematic diagram of designated bits according to another embodiment;
FIG. 6 is a flowchart of a data transmission method according to another embodiment;
FIG. 7 is a structural diagram of a data transmission apparatus according to an embodiment;
FIG. 8 is a structural diagram of a data transmission apparatus according to another embodiment;
FIG. 9 is a schematic diagram of a hardware structure of a transmitter according to an embodiment; and
FIG. 10 is a schematic diagram of a hardware structure of a receiver according to an embodiment.

### DETAILED DESCRIPTION

The present application is described hereinafter in conjunction with drawings and embodiments. It is to be understood that the embodiments described herein are intended to explain the present application and not to limit the present application. It is to be noted that if not in collision, embodiments of the present application and features therein may be combined with each other in any manner. Additionally, it is to be noted that for ease of description, only part, not all, of structures related to the present application are illustrated in the drawings.

For grant-free transmission, a transmitter (such as a user terminal) may send data autonomously without sending a scheduling request or waiting for dynamic scheduling. The grant-free transmission can reduce signaling overhead and transmission delay, and can also reduce power consumption of the transmitter. Additionally, the grant-free transmission may also be combined with non-orthogonal transmission to increase the number of transmitters accessing the wireless network.

Grant-free transmission includes two solutions, that is, a pre-configured (that is, semi-persistent scheduling or configured grant) grant-free solution and a contention-based grant-free solution. For the pre-configured grant-free solution, the receiver (e.g., base station) may pre-configure or semi-statically configure a time-frequency resource and a pilot sequence and the like for each transmitter to avoid collisions by having multiple transmitters use different time-frequency resources and/or pilot sequences in order to perform user identification and detection on the transmitters. The available time-frequency resource is periodic, more suitable for periodic traffic, while for random burst traffic, the transmission efficiency is low and the delay is large. However, for the contention-based grant-free solution, when the transmitter has a traffic transmission requirement, a time-frequency resource, a pilot sequence, and the like may be selected randomly for contention-based access and transmission. Time-frequency resources, pilot sequences, and the like used by multiple transmitters may collide. The receiver needs to implement user identification and detection for the transmitter through a more complex blind detection algorithm. With better transmission efficiency and lower delay, the contention-based grant-free solution is more suitable for random burst traffic.

For contention-based grant-free transmission, if the resources used by multiple transmitters collide, the data transmission performance of these transmitters is severely affected. The present application provides a data transmission method in which data transmission is performed on one or more resource units, and the transmitted data block carries information about the number of the resource units and the positions of the resource units, so that the receivers can perform comprehensive reception and processing, thereby improving the reliability of the data transmission, improving the transmission performance in the case of collision, and further improving the performance and capacity of the contention-based grant-free transmission.

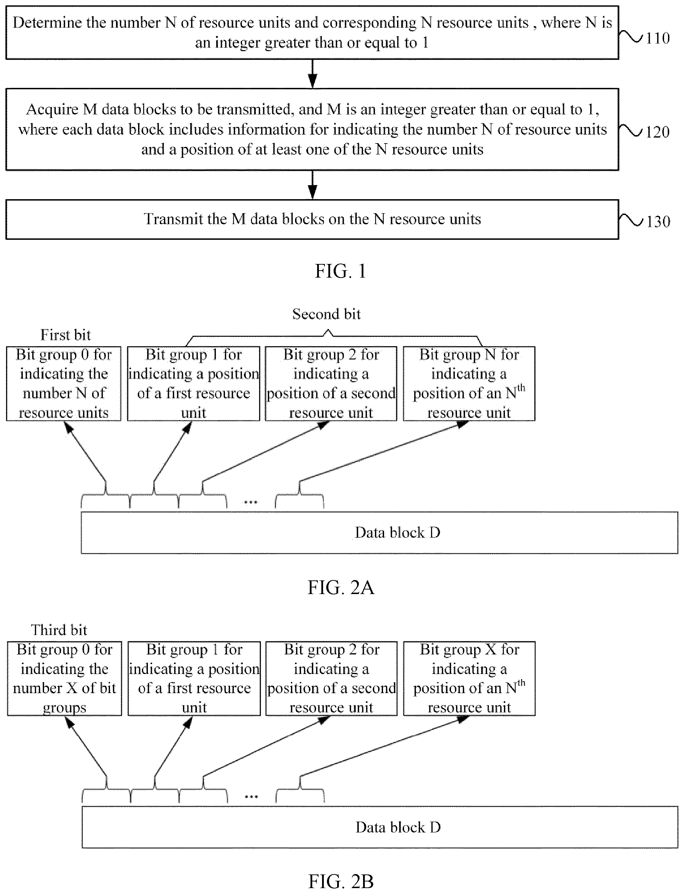

FIG. 1 is a flowchart of a data transmission method according to an embodiment. As shown in FIG. 1, the method provided in this embodiment includes 110 to 130 described below.

In 110, the number N of resource units and corresponding N resource units are determined, where N is an integer greater than or equal to 1.

In 120, M data blocks to be transmitted are acquired, M is an integer greater than or equal to 1, where each data block of the M data blocks includes information for indicating the number N of resource units and a position of at least one of the N resource units.

In 130, the M data blocks are transmitted on the N resource units.

In this embodiment, the transmitter transmits M data blocks using N resource units and carries information about the number N of resource units and the position of at least one of the N resource units in each data block, thus providing a reliable basis for receiver processing. On this basis, as long as the transmitter does not collide with other transmitters on a certain resource unit, the data transmitted by the transmitter may be received and decoded by the receiver at a high probability (without considering other factors in the network, such as poor signal quality, interference or noise, etc.), and the receiver can acquire information such as the resource units used by the transmitter from the decoded data, and the data on the resource units can be comprehensively processed by using the information, so that the reliability of data transmission can be improved, the transmission performance in a collision situation can be improved, and the performance and capacity of the contention-based grant-free transmission can be improved.

It is to be noted that this embodiment does not define the execution sequence of 110 and 120, that is, the transmitter may first determine N resource units, and then acquires M data blocks according to the N resource units; the transmitter may also first acquire M data blocks, and then determine N resource units according to the M data blocks; the transmitter may also first acquire the M data blocks, and determine the N resource units after a portion of the processing is performed during execution, and then other processing for the M data blocks may be continued.

In an embodiment, 110 includes determining, according to the information for indicating the number N of resource units and the position of at least one of the N resource units included in each data block of the M data blocks, the number N of resource units and the corresponding N resource units.

In this embodiment, the transmitter may first acquire M data blocks to be transmitted, where each data block of the M data blocks includes designated bits for indicating the number N of resource units and the position of at least one of N resource units. The transmitter can determine the number N of resource units for transmitting the M data blocks and the positions of the N resource units according to the information included in the M data blocks. For example, the bit values of some bits in each data block may indicate the number N of resource units and the positions of the N resource units, or the position of the starting resource unit of the N resource units or the position of the last resource unit of the N resource unit. As another example, it is possible to indicate which resource units are used for transmitting data blocks and the like in the form of bitmap through some bits in each data block. The transmitter can determine all positions of the N resource units according to these bit values in each data block, and then use the N resource units to transmit M data blocks.

In an embodiment, 110 includes: randomly determining the number N of resource units and randomly selecting N resource units; or determining the number N of resource units according to the number M of data blocks to be transmitted and randomly selecting N resource units.

In this embodiment, the transmitter may first determine N resource units, for example, randomly determine the number N of resource units, and randomly select N resource units from the configured available resource units for transmitting the data blocks; may also first acquire M data blocks, and then determines N resource units according to the number M of data blocks, for example, if the number M of data blocks is two, the two data blocks can be transmitted by using N=2 resource units. M and N may or may not be equal. For example, N may be determined according to a specific transmission solution. If M is less than N, the resource units are sufficient, then one data block may be repeatedly sent on multiple resource units. If M is greater than N, the resource units are relatively less, and multiple data blocks may be sent superimposed on one resource unit, or the M data blocks may be sequentially sent on time domain.

In an embodiment, 120 includes acquiring M data groups, adding the information for indicating the number N of resource units and the position of at least one of the N resource units to each data group of the M data groups, and generating the M data blocks to be transmitted.

In this embodiment, the transmitter may first determine the N resource units, and then acquire the M data groups to be transmitted, some bits are added to each data group to be transmitted for indicating the information about the number N of resource units and the position of at least one of the N resource units, thereby generating the M data blocks. Alternatively, some bits may be added to each data group to indicate the number (N -1) of other resource units used in addition to the resource unit used by the current data block, and to indicate the position of at least one of the (N-1) resource units. These two manners may be considered equivalent, the latter is somewhat less overhead.

In an embodiment, each data block of the M data blocks includes designated bits for indicating the information about the number N of resource units and the position of at least one of the N resource units.

In this embodiment, each data block includes the designated bits, and carries the information for indicating the number N of resource units and the position of at least one of the N resource units.

In an embodiment, the designated bits are implicit indication bits or explicit indication bits.

In this embodiment, the designated bits may be the implicit indication bits, that is, the data bits having the existing meaning in the M data blocks to be transmitted are used for implicitly indicating the number N of resource units and the position of at least one of the N resource units while carrying the existing information; and the designated bits may also be the explicit indication bits, i.e. additional data bits on the basis of the data group to be transmitted.

In an embodiment, the designated bits are data bits in common data, and the common data is data included in each data block of the M data blocks.

In this embodiment, the designated bits may be the data bits in the common data included in each data block of the M data blocks, that is, each data block includes the common data, and some of the data bits in the common data serve as designated bits for indicating the number N of resource units and the position of at least one of the N resource units.

In an embodiment, the designated bits include one of the following: a first bit for indicating the number N of resource units, and a second bit for indicating the position of at least one of the N resource units; a third bit for indicating the number X of bit groups, and X bit groups for indicating the position of at least one of the N resource units, where X is an integer greater than or equal to 1; a first bitmap for indicating the position of at least one of the N resource units; or a fourth bit for indicating a position of the first resource unit of the N resource units and a fifth bit for indicating a position of the last resource unit of the N resource units.

In this embodiment, the designated bits include the first bit and the second bit, where the first bit is used for indicating the number N of resource units, and the second bit is used for indicating the position of at least one of the N resource units; or the designated bits include the third bit and at least one bit group, where the third bit is used for indicating the number X of bit groups, and X bit groups are used for indicating the position of at least one of the N resource units; or the designated bits include the first bitmap, where the first bitmap is used for indicating the position of at least one of the N resource units; or the designated bits include the fourth bit and the fifth bit, where the fourth bit is used for indicating the position of the first resource unit of the N resource units, and the fifth bit is used for indicating the position of the last resource unit of the N resource units.

In an embodiment, 110 includes determining the number N of resource units and the corresponding N resource units according to a designated rule in a case where the designated bits include the first bitmap for indicating the position of at least one of the N resource units and the values of bits in the first bitmap are all 0 or the number of bits with a value of 1 in the first bitmap exceeds a designated value.

In this embodiment, the designated bits include the first bitmap, for example, the first bitmap is "01010101", where a bit with a value of 0 in the first bitmap indicates that the resource unit at the position corresponding to the bit with a value of 0 is not used, and a bit with a value of 1 in the first bitmap indicates that the resource unit at the position corresponding to the bit with a value of 1 is used. According to the first bitmap, the number of resource units can be determined to be 4, which are the second, fourth, sixth and eighth resource units respectively. The number of resource units and the position of each resource unit can be indicated at the same time by using the bitmap manner, that is, the number of resource units is implicitly indicated while indicating the positions of the resource units. If the values of bits in the first bitmap are all 0, or the number of bits with a value of 1 in the first bitmap exceeds the designated value, the number N of resource units and the corresponding N resource units may be determined by using the designated rule. For example, in the case where all values in the first bitmap are 0, all resource units are used for transmitting data blocks, or designated number of resource units in designated positions are used for transmitting data blocks.

In an embodiment, each data block further includes at least one of the following information: starting position information of available resource units, or quantity information of available resource units.

In this embodiment, each data block may indicate the starting position information of the available resource units and/or the quantity information of the available resource units in addition to the number N of resource units used for transmitting the M data blocks and the position of at least one of the N resource units. In one example, no available resource unit is pre-configured for the transmitter, the transmitter determines the available resource units according to the indication information in the data blocks, or the transmitter determines the available resource units and adds the indication information to the data blocks. In one example, a resource unit pool (which may also be referred to as an overall available resource units) may be pre-configured for the transmitter, the available resource units (which may also be referred to as local available resource units or currently available resource units) are determined from the resource unit pool according to the indication information in the data blocks, or the transmitter determines the available resource units from the resource unit pool and adds the indication information to the data blocks. The transmitter determines N resource units from the available resource units for transmitting M data blocks, and the number of available resource units is greater than or equal to N.

In an embodiment, N resource units satisfy at least one of the following: the N resource units being located within a coherent bandwidth range, the N resource units being located within a coherent time range, or the channels on the N resource units being coherent.

In this embodiment, the N resource units used for transmitting the M data blocks are in a certain bandwidth range or in a certain time range, or the channels on the N resource units are related, so that the channels on the N resource units have strong correlation, thereby simplifying receiver processing and implementation.

In an embodiment, each data block further includes at least one of the following information: pilot information used on at least one of the N resource units, or sequence information used on at least one of the N resource units.

In this embodiment, each data block further includes the pilot information used on at least one of the N resource units, and/or the sequence information used on at least one of the N resource units. For example, each data block may include one of the following: pilot information used on N resource units, sequence information used on N resource units, pilot information and sequence information used on N resource units, pilot information used on the resource units transmitting the current data block, sequence information used on the resource units transmitting the current data block, or pilot information and sequence information used on the resource units transmitting the current data block.

In an embodiment, at least one of the M data blocks further includes identification information.

In this embodiment, at least one of the M data blocks further includes the identification information for the receiver to identify the transmitter.

In an embodiment, at least one of the M data blocks further includes payload data.

In this embodiment, at least one of the M data blocks further includes the payload data, such as a designated message, traffic data, etc., for obtaining corresponding information after decoding and processing by the receiver.

In an embodiment, 130 includes separately processing the M data blocks and then mapping the M data blocks to corresponding resource unit of the N resource units for transmission, where the processing includes at least one of encoding, scrambling (including partial scrambling), modulation, spreading, interleaving, precoding, superimposing, or the like.

In an embodiment, the transmitter transmits the data blocks on one or more resource units, and the M data blocks transmitted on various resource units are the same, that is, the transmitter transmits the same data block D on various resource units, respectively, thereby improving the transmission reliability in the case of the contention-based grant-free transmission. The transmitter may be a terminal. In this embodiment, the transmitter determines the number N of resource units for transmitting the data blocks and the corresponding N resource units, acquires the data block D to be transmitted on various resource units, and then transmits the data block D on each resource unit separately.

In an embodiment, the transmitter may determine the number N of resource units and the corresponding N resource units according to the designated bits in the data block D.

FIG. 2A is a schematic diagram of designated bits according to an embodiment. As shown in FIG. 2A, the transmitter may determine the number N of resource units according to the designated bit group 0 (i.e., the first bit in the designated bits) in the data block D, and N is greater than or equal to 1. The designated bit group 0 may include A bits, and A is an integer greater than or equal to 1. The value of A is related to the number of available resource units. For example, if there are four available resource units, A=2 bits can be used for indicating the number N of resource units ("00", "01", "10" and " 11" are used for indicating the number of resource units N=1, N=2, N=3 and N=4 respectively); and if there are eight available resource units, A=3 bits can be used for indicating the number of resource units. As shown in FIG. 2A, the transmitter may also determine the corresponding N resource units according to the designated bit groups 1 to N (i.e., the second bit in the designated bits) in the data block D. The designated bit groups 1 to N may also include A bits, respectively, and each bit group indicates position information of one resource unit, where the position information may be an index of one resource unit.

The designated bit groups 1 to N may be successive N bit groups or may be not successive. In one case, for example, the bits in the successive N bit groups are different and can be used for indicating different position information, respectively, and the N bit groups can be used as designated bits to indicate the position information of the N resource units, respectively.

In another case, for example, if the bits in one bit group and the bits in a certain previous bit group are the same, that is the one bit group and the certain previous bit group may indicate the same position. In this case, the one bit group may not be used for indicating the position information of one resource unit, and it may be deferred to determine whether the next bit group can be used for indicating the position information of the resource unit, and if the bits in the next bit group are different from the bits in the previous bit groups, the next bit group may be used for indicating the position information of one resource unit until the N bit groups are used for indicating or determining the positions of the N resource units.

In an embodiment, even if the bits in the one bit group are the same as the bits in the certain previous bit group, that is, the one bit group and the certain previous bit group indicate the same position, the resource unit of the position may be used for transmitting data. In this case, postponement may not be performed.

In the case of contention-based grant-free transmission, the number and the positions of the resource units used by the transmitter are unknown to the receiver, and it is also uncertain which data block transmitted on the resource units can be decoded correctly. Therefore, the transmitter provides a reliable basis for the receiver to decode the data transmitted on the various resource units by indicating the number N of the resource units and the position information of at least one of the N resource units in the data block D transmitted on each resource unit.

FIG. 2B is a schematic diagram of designated bits according to another embodiment. As shown in FIG. 2B, the transmitter may determine the number X of bit groups according to the designated bit group 0 (i.e., the third bit in the designated bits) in the data block D, where X is greater than or equal to 1, and determines N resource units for transmitting the data block according to the designated bit groups 1 to X in the data block D, where each bit group in the bit groups 1 to X indicates position information of one resource unit, and the position information may be an index of one resource unit.

If the bits in the designated bit groups 1 to X are all different, the designated bit groups can be used directly and can be used for indicating the position information of each of X resource units respectively. However, the bits in certain bit groups in the designated bit groups 1 to X may be the same. If the bits in one bit group are the same as the bits in a certain previous bit group, that is, the one bit group and the certain previous bit group indicate the same position, in this case, the one bit group will not be used for indicating the position information of one resource unit. If one or some of bit groups are not used, the number of resource units actually determined for transmitting the data blocks will be less than X. Therefore, as shown in FIG. 2B, the bit group X indicates the position of an N^{th} resource unit, and 1<=N<=X.

In this embodiment, the designated bit group 0 indicates that the number of bit groups for indicating the positions of the resource units is X, and the resource units for transmitting the data blocks may be determined according to the X designated bit groups. In the example shown in FIG. 2B, the number of resource units and the resource units used for transmitting the data blocks are jointly determined according to the designated bit group 0 and the designated bit groups 1 to X, that is, it is jointly determined the number of resource units used for transmitting the data blocks to be N, and the positions of the N resource units.

The designated bit groups 1 to X may be successive X bit groups or may be not successive, for example, various bit groups may have designated intervals therebetween.

It should be noted that if in the example shown in FIG. 2A, the N bit groups satisfying the condition (different) cannot be found to indicate or determine the positions of the N resource units in a case of postponing to the last position or the designated position of the data block D, the number of resource units actually used may be less than N.

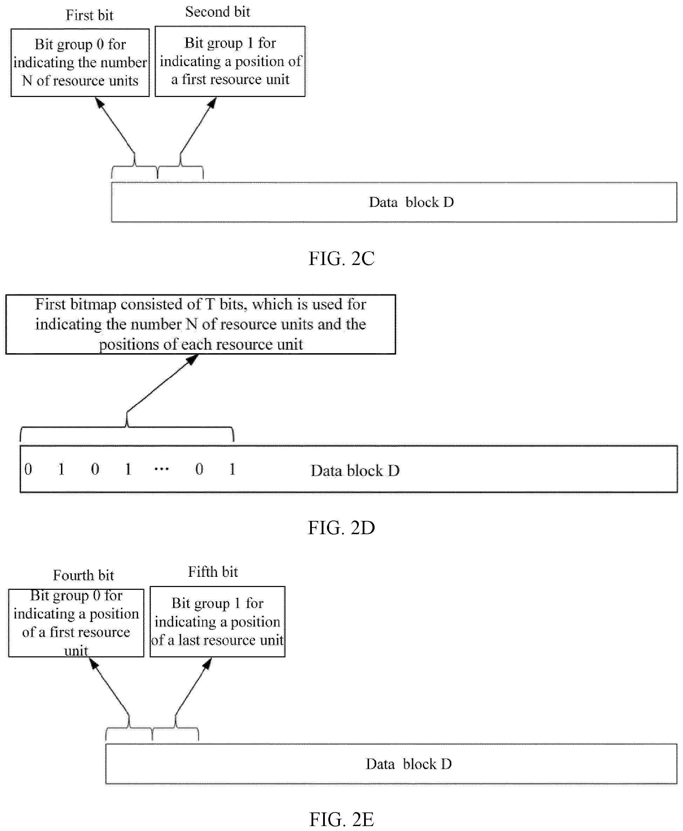

FIG. 2C is a schematic diagram of designated bits according to another embodiment. As shown in FIG. 2C, the transmitter may determine the number N of resource units for transmitting the data blocks according to the designated bit group 0 (i.e., the first bit in the designated bits) in the data block D, where N is greater than or equal to 1, may also determine the position of the first resource unit for transmitting the data blocks according to the designated bit group 1 (i.e., the second bit in the designated bits) in the data block D.

In this embodiment, the transmitter may use N successive resource units, and after the number N of resource units and the position of the first resource unit are determined, the transmitter determines the successive N resource units starting from the first resource unit as the N resource units for transmitting the data blocks. If it is not possible to acquire N successive resource units until the last available resource unit, then resource units are acquired from the first resource unit, which is equivalent to acquiring N resource units circularly, or the acquired N resource units are circularly successive.

In this embodiment, the transmitter may also use N resource units having a designated interval, and after the number N of resource units and the position of the first resource unit are determined, the transmitter determines the N resource units having the designated interval from the first resource unit as the N resource units for transmitting the data blocks. Similarly, N resource units can be cyclically acquired in the available resource units. If a cyclically acquired resource unit and a previous determined resource unit are the same, the resource unit may be reused, or the resource unit can be postponed to the next resource unit different from the previously determined resource unit, and the next resource unit satisfying the designated interval can be acquired based on the resource unit. The designated interval may be preset, or may be indicated by the designated bit group 2 in the data block D.

In this embodiment, the designated bit group 1 may indicate the position of any one designated resource unit of N resource units, and only the position of the first resource unit is described as an example.

In this embodiment, the randomness of the positions of the N resource units is deteriorated, but the correlation of the channels on the N resource units is better.

FIG. 2D is a schematic diagram of designated bits according to another embodiment. As shown in FIG. 2D, the transmitter may determine the number of resource units and the corresponding resource units for transmitting the data blocks according to the first bitmap. The bitmap consists of T designated bits in the data block D. The value of T is related to the number of available resource units. For example, if there are eight available resource units, T=8. An example of bitmap is "01010101", a bit with a value of 0 in the bitmap indicate that the resource unit at the position corresponding to the bit with a value of 0 is not used, and a bit with a value of 1 in the bitmap indicate that the resource unit at the position corresponding to the bit with a value of 1 is used. Therefore, it can be seen that the number of resource units used for transmitting the data blocks is four, and the resource units are the second resource unit, the fourth resource unit, the sixth resource unit, and the eighth resource unit, respectively. It can also be seen here that the number of resource units and the position of each resource unit can be indicated at the same time by using the bitmap manner, that is, the number of resource units is implicitly indicated while indicating the position of each resource unit.

In this embodiment, the first bitmap may be derived from data bits having an existing meaning in the data for implicitly indicating the information about the number of the resource units and the position of each resource unit.

In the case where all bits in the first bitmap are 0, the number of resource units and the corresponding resource units used for transmitting the data blocks may be determined according to the designated rule. For example, it is possible to use all the resource units, which is equivalent to performing bit inversion, and all the obtained bits are 1; or the designated number of resource units at designated positions are used, for example, one resource unit at the designated position is used, two resource units at the designated positions are used, the resource units at the odd positions are used, the resource units at the even positions are used, or designated number of resource units at the front, rear or middle are used, etc.

In the case where all bits in the first bitmap are 1 (or the number of bits of 1 exceed a certain number), if it is not desired to use all resource units (or not desired to use more than a certain number of resource units), the number of resource units and the corresponding resource units used for transmitting the data blocks may also be determined according to the designated rule. For example, the designated number of resource units at designated positions are used.

In an embodiment, the number N of resource units used for transmitting the data blocks may be limited, for example, let N be less than or equal to V, where V may be 1/2, 1/3, etc. of the number of available resource units. In the case where the number N of resource units determined by the transmitter is greater than V, let N = V, and then the positions of resource units for transmitting the data blocks are determined according to any embodiment described above. Alternatively, the value range of N may be limited by limiting the number of bits in the bit group 0 (i.e., the first bit in the designated bits). For example, assuming that there are eight available resource units, and the number of resource units limited for transmitting the data blocks is at most 4, the number of resource units may be indicated using the bit group 0 including two bits, and each bit group indicating the positions of resource units may still include three bits, that is, the number of bits included in the bit group 0 and the number of bits included in other bit groups may be different.

For the example of FIG. 2D, in the case where the number N of resource units determined by the bitmap composed of T bits is greater than V, the number of resource units may be determined according to a bitmap composed of bits at designated positions. For example, in the case where the first bit is 0, a bitmap composed of V bits at even positions is used; and in the case where the first bit is 1, a bitmap composed of V bits at odd positions is used. Alternatively, in the case where the first two bits are 00, 01, 10, or 11, a bitmap composed of V bits of odd positions, V bits of even positions, the first V bits, or the last V bits, or the like is respectively used, that is, a designated bit in the first bitmap is used for indicating a new bitmap composed of bits at designated positions, which is used for indicating the number of the resource units and the position of each resource unit actually used.

FIG. 2E is a schematic diagram of designated bits according to another embodiment. As shown in FIG. 2E, the transmitter may determine the position of the first resource unit in N resource units for transmitting the data blocks according to the designated bit group 0 (i.e., the fourth bit in the designated bits) in the data block D, and may determine the position of the last resource unit in N resource units for transmitting the data blocks according to the designated bit group 1 (i.e., the fifth bit in the designated bits) in the data block D. The N resource units may be all successive resource units, or resource units with a designated interval, between the first resource unit and the last resource unit.

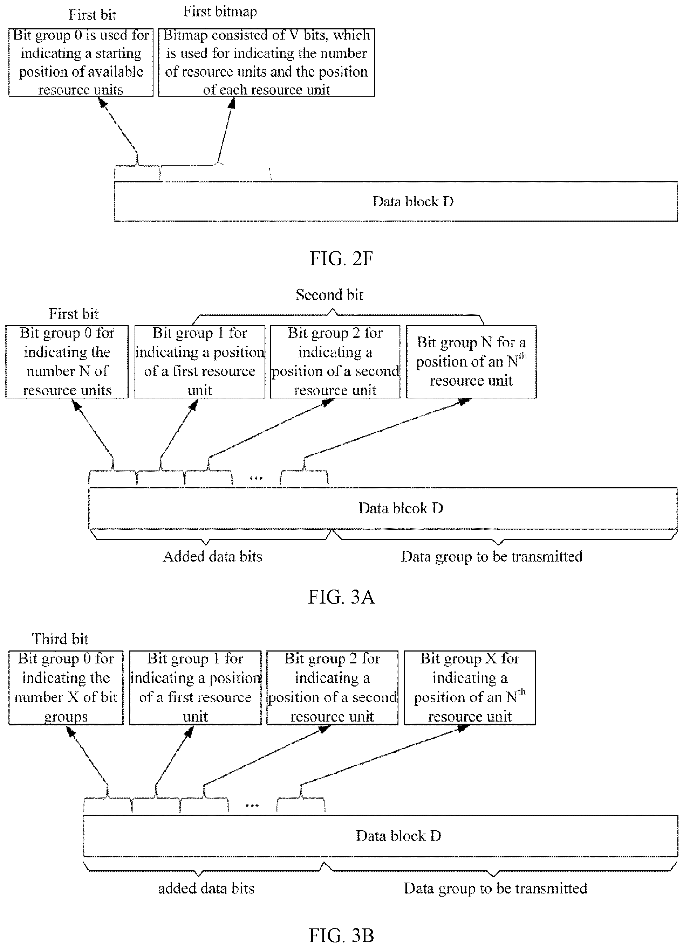

FIG. 2F is a schematic diagram of designated bits according to another embodiment. As shown in FIG. 2F, the designated bit group 0 (equivalent to the first bit in the designated bits) may indicate the starting position of the currently available resource units (or locally available resource units), and the bitmap (equivalent to the first bitmap in the designated bits) composed of V bits may correspond to the currently available resource units. That is, the bitmap may correspond to V resource units at the designated positions starting from the resource unit indicated by the bit group 0, and the bitmap is used for indicating the number of the resource units and the position of each resource unit for transmitting the data blocks, that is, the position of the first resource unit in the resource units corresponding to the bitmap may be determined according to the bit group 0, and the number and the positions of resource units for transmitting the data blocks may be determined from the corresponding resource units according to the bitmap. In addition, the currently available resource units may be cyclically acquired in the available resource units (which may be overall available resource units configured for the transmitter), or the bitmap may correspond to the available resource units cyclically. This embodiment advantageously ensures that channels on the N resource units for transmitting the data blocks are related.

In addition, this embodiment is also applicable to a case where the overall available resource units are unknown, and the starting position of the overall available resource units may be determined according to the designated bit group 0, and the N resource unit for transmitting the data blocks may be determined from the corresponding resource units according to the bitmap.

In the above embodiments, the bit group 0, the bit group 1 and the like start from the header of the data block D, they may also start from the tail of the data block D or the designated position, and are distributed according to a designated rule. For example, starting from the tail of the data block D, there may be the designated bit group 0, the designated bit group 1 and the like in the direction from the tail to the head of the data block D. The designated bit group 1 and the designated bit group 0 may be adjacent or may be non-adjacent, for example, the designated bit group 1 may be from a designated position, or the designated bit group 1 and the designated bit group 0 may have a designated interval therebetween.

In the above embodiments, it is also possible for the first bitmap to start from a designated position and be distributed according to a designated rule. For example, T bits at the tail of the data block D indicate the usage of various available resource units from the tail to the head, or the usage of various available resource units from the head to the tail, respectively.

In an embodiment, the number (N-1) of resource units can be indicated by the designated bits of the data blocks, which represents that (N-1) resource units are used in addition to the resource unit used by the current data block.

In an embodiment, if N is a fixed value, the number of resource units may not be indicated, and only the position of at least one of N resource units may be indicated.

In an embodiment, the bitmap may also be used for indicating a resource pattern, where the resource pattern may be pre-configured or semi-statically configured, or may be acquired according to a designated rule, for example, a designated combination form is acquired by combining available resource units.

In an embodiment, the data block D may include payload data, such as traffic data, a designated message, and the like. The data block D may also include the identification information of the transmitter, so that the receiver can decode the data and know which transmitter sent the data. The data block D may be an uncoded, pre-coded or post-coded data block.

The designated bits in the above embodiments may be at least one of data bits of payload data in the data block D, data bits carrying identification information of transmitters, or the like. Although these data bits have the existing meaning, they may be used for implicitly indicating or carrying the number N of resource units and the position of at least one of N resource units.

In an embodiment, the data block D may also carry at least one of pilot (e.g., preamble, pilot, reference signal, etc.) information, sequence (e.g., spreading sequence, interleaving sequence, scrambling code sequence, sequence set, etc.) information used on the N resource units. Carrying this information may provide a reliable basis for receiver processing. After correct decoding is performed on the data of one resource unit, the receiver may reconstruct the transmission symbols and perform interference cancellation, etc., according to this information, to assist in decoding data on the other resource units. In this embodiment, pilot information, sequence information, and the like used on the N resource units may be carried in the data blocks, or a data block transmitted on the n^{th} resource unit may only carry the pilot information, sequence information, and the like used on the current resource unit, where 1<=n<=N. In this case, when decoding is completed on the n^{th} resource unit, it may also be used for assisting in decoding the data on the other resource units. In an embodiment, if there is a designated association between the pilot information and the sequence information, only the pilot information or the sequence information may be carried in the data block D.

In an embodiment, bits carrying pilot information, sequence information, and the like may be in the form of a bit group similar to any embodiment described above, or may be in the form of a bitmap similar to any embodiment described above.

In an embodiment, bits carrying the pilot information, the sequence information, and the like may be from data bits having the existing meaning in the data for indicating the pilot information, the sequence information, and the like in an implicit manner.

In an embodiment, bits carrying the pilot information, the sequence information, and the like may also be additional added bits. In this embodiment, the transmitter first determines pilot information, sequence information, and the like used on various resource units. For example, the transmitter may determine the pilot information, the sequence information, and the like by random generation or random selection. Then, the transmitter adds additional corresponding bits to the data to be transmitted, to indicate the pilot information, the sequence information, and the like in an explicit manner.

In an embodiment, bit multiplexing may be further considered, that is, some bits simultaneously indicate or carry a plurality of pieces of information.

In an embodiment, the available resource units may include a plurality of resource units on the frequency domain, a plurality of resource units on the time domain, or a plurality of resource units on the time frequency domain.

In an embodiment, the channels on the available resource units are coherent, or the available resource units are located within the coherent bandwidth and/or coherent time range. In an embodiment, the channels on the plurality of resource units for transmitting the data blocks are coherent, or the plurality of resource units are located within the coherent bandwidth and/or coherent time range.

In an embodiment, the available resource units may be pre-configured or determined according to a preset rule.

In an embodiment, the available resource units may be determined autonomously by a transmitter, and the starting position, number or range of the available resource units is unknown for the receiver. In this case, the data blocks transmitted by the transmitter may carry the starting position information of the available resource units, for example, an offset to the first resource unit or a designated position of the overall bandwidth, or an index of the starting resource unit, etc.; a manner similar to the example shown in FIG. 2F may be adopted; the quantity information of available resource units can also be carried in the data blocks; and the starting position, number, or range of available resource units can be indicated either in an implicit manner or an explicit manner.

In an embodiment, the transmitter may transmit the data blocks D on N resource units, respectively, to form N transmissions. When the N resource units are N resource units on the time domain (frequency domain positions are the same or different), the N transmissions may consist of a first transmission and a retransmission, and the transmitter may determine whether the retransmission is to be performed, for example, whether a certain retransmission is to be performed is determined according to time domain intervals of the N resource units or according to other designated bits.

In an embodiment, the transmitter may perform low code rate encoding for the data block D over N resource units, and then perform transmitting.

In this embodiment, the bits in the data block D are used for implicitly indicating the number N of resource units, the position of at least one of N resource units, and the like, so that the indication overhead can be saved.

In an embodiment, the transmitter will transmit data on one or more resource units. The M data blocks transmitted by the transmitter on various resource units are the same, that is, the transmitter transmits the same data block D on various resource units, so that the transmission reliability is improved in the case of the contention-based grant-free transmission. In this embodiment, the transmitter first determines the number of resource units and the corresponding resource units for transmitting the data blocks.

In an embodiment, the transmitter may randomly select the number and positions of resource units used for transmitting the data blocks. For example, assuming that there are eight available resource units, the number of resource units randomly selected by transmitter is three, and the positions or indexes of three resource units are randomly selected from the eight available resource units, such as the first resource unit, the third resource unit and the sixth resource unit, respectively. Then, the transmitter acquires the data block D to be transmitted on various resource units, and transmits the data block D on various resource units.

FIG. 3A is a schematic diagram of designated bits according to another embodiment. As shown in FIG. 3A, the transmitter first acquires a data group to be transmitted, adds a bit group 0 (i.e., a first bit in the designated bits) to the data group for indicating the number N of resource units, and adds bit groups 1 to N (i.e., a second bit in the designated bits) to the data group for indicating the position of each resource unit, where the position may be an index of one resource unit, thereby forming a data block D. The bit group 0 and the bit groups 1 to N may include different numbers of bits.

In the case where contention-based grant-free transmission is performed on a plurality of transmitters, the number of resource units used by the plurality of transmitters may be different, and then the size of the data blocks finally formed by the plurality of transmitters may be different, in this case bit padding may be considered such that the sizes of the data blocks of various transmitters are the same.

In the case of contention-based grant-free transmission, the number and position of the resource units used by the transmitters are unknown to the receiver, and it is also uncertain which data block transmitted on the resource unit can be decoded correctly. Therefore, an indication can be made in the data block D transmitted on each resource unit, so that the receiver decodes the data transmitted on the various resource units.

FIG. 3B is a schematic diagram of designated bits according to another embodiment. As shown in FIG. 3B, the transmitter first acquires a data group to be transmitted, adds a bit group 0 (i.e., a third bit in the designated bits) to the data group for indicating the number X of bit groups, and adds bit groups 1 to X to the data group for indicating the number N of the resource units and the position of at least one resource unit.

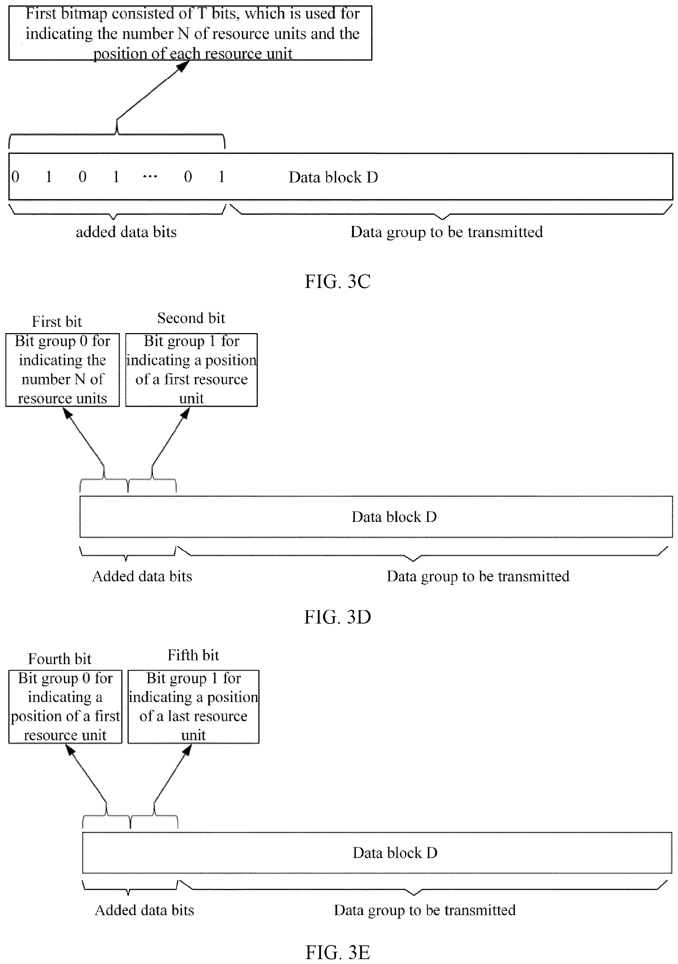

FIG. 3C is a schematic diagram of designated bits according to another embodiment. As shown in FIG. 3C, the transmitter acquires a data group to be transmitted and adds the first bitmap to the data group for indicating the number of the resource units and the position of each resource unit, thereby forming a data block D. The first bitmap consists of T bits. The value of T is related to the number of available resource units. For example, according to the above example, the first, third, and sixth resource units of eight available resource units are used, then T = 8, the bitmap may be "10100100", a bit with a value of 0 in the bitmap indicate that the resource unit at the position corresponding to the bit with a value of 0 is not used, and a bit with a value of 1 in the bitmap indicate that the resource unit at the position corresponding to the bit with a value of 1 is used. The number of resource units and the positions of each resource unit can be indicated at the same time by using the bitmap manner, or the number of resource units is implicitly indicated while indicating the positions of the resource units. In this example, N resource units are indicated by using the bitmap, which has a relatively small and fixed indication overhead.

In an embodiment, for example, assuming that there are eight available resource units, the number N of resource units randomly determined or selected by transmitter is three, and the position or index of the first resource unit is randomly determined or selected, three successive resource units starting from the first resource unit are determined as three resource units used for transmitting the data blocks. For example, if the first resource unit used is resource unit 2, resource unit 2, resource unit 3, and resource unit 4 are determined to be three resource units for transmitting the data blocks. Then, the transmitter acquires the data block D to be transmitted on various resource units, and transmits the data block D on various resource units.

FIG. 3D is a schematic diagram of designated bits according to another embodiment. As shown in FIG. 3D, the transmitter acquires a data group to be transmitted, adds a bit group 0 (i.e., a first bit in the designated bits) to the data group for indicating the number N of resource units, and further adds a bit group 1 (i.e., a second bit in the designated bits) to the data group for indicating the position information of the first resource unit used for transmitting the data blocks, where the position information may be an index of one resource unit, thereby forming a data block D.

In this embodiment, N resource units having a designated interval from the determined first resource unit may also be determined as N resource units for transmitting the data blocks. The designated interval may be preset, or may be indicated by adding a bit group 2 in the data groups to be transmitted.

In this embodiment, N resource units can be cyclically acquired in the available resource units.

In this embodiment, the position of any designated resource unit in N resource units can also be determined and indicated by the bit group 1, and only the position of the first resource unit is determined and indicated to be illustrative herein.

In this embodiment, the overall indication overhead is small and relatively fixed, and it is easier to ensure that the channels of the N resource units are coherent, with the disadvantage that the randomness of the positions of the resource units are deteriorated.

FIG. 3E is a schematic diagram of designated bits according to another embodiment. As shown in FIG. 3E, the transmitter may add a designated bit group 0 (i.e., the fourth bit in the designated bits) for indicating the position of the first resource unit of the N resource unit for transmitting the data blocks on the basis of the data group to be transmitted, and may add a designated bit group 1 (i.e., the fifth bit in the designated bits) for indicating the position of the last resource unit in N resource units for transmitting the data blocks. The N resource units used by the transmitter may be all successive resource units between the first resource unit and the last resource unit, or resource units with a designated interval.

In an embodiment, the number N of resource units used for transmitting the data blocks may be limited, for example, let N be less than or equal to V, where V may be 1/2, 1/3, etc. of the number of available resource units.

In an embodiment, it is assumed that there are eight available resource units from which the transmitter randomly selects one resource unit as the starting resource unit, and V resource units at designated positions starting from the one resource unit are used as the currently available resource units (or locally available resource units), for example, resource unit 3 is used as the starting resource unit, and four successive resource units (i.e., resource units 3, 4, 5, 6) from the resource unit 3 are used as the currently available resource units. Then, the transmitter determines the number of resource units for transmitting the data blocks and the corresponding resource units from the currently available resource units. For example, the transmitter may randomly select the number of resource units for transmitting the data blocks as N = 2, and randomly select two resource units, such as, resource units 3, 5, from the currently available resource units as the resource units for transmitting the data blocks. Similarly, currently available resource units can be cyclically acquired in the available resource units. Then, the transmitter acquires the data block D to be transmitted on various resource units, and transmits the data block D on various resource units.

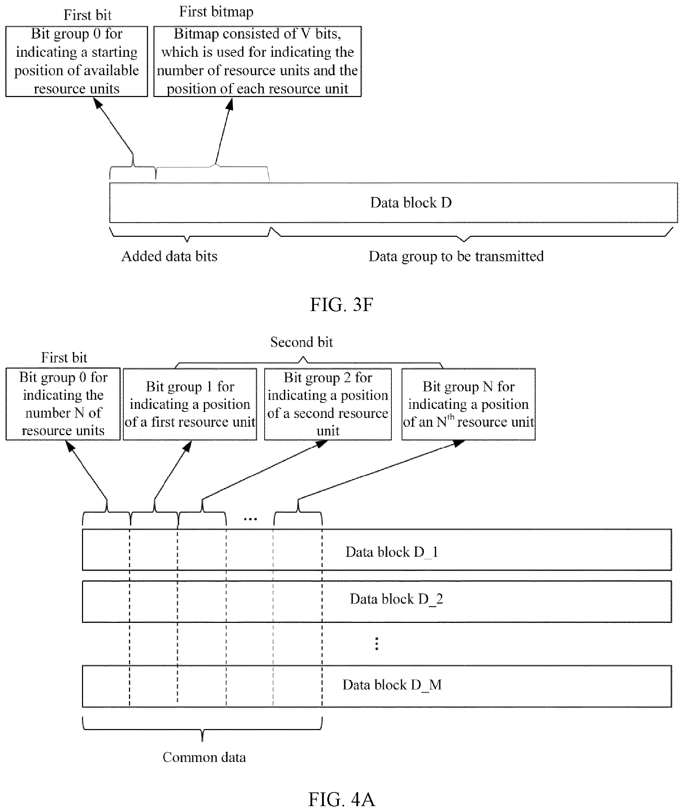

FIG. 3F is a schematic diagram of designated bits according to another embodiment. As shown in FIG. 3F, the transmitter acquires a data group to be transmitted, adds a bit group 0 (i.e., a first bit in the designated bits) to the data group for indicating the starting position information (i.e., the position information of the first resource unit) of the currently available resource units, and adds a bitmap (i.e., a first bitmap in the designated bits) to the data group for indicating the number of resource units and the position information of various resource units used for transmitting the data blocks in the currently available resource units, thereby forming a data block D. In this embodiment, the indication overhead is also small and relatively fixed, and it is beneficial to ensure that the channels of the plurality of resource units for transmitting the data blocks are coherent, and the positions of the resource units have better randomness.

In an embodiment, the number (N-1) of resource units may be carried in the data blocks, which represents that the other (N-1) resource units are used in addition to the current resource unit.

In an embodiment, the number of resource units used by the transmitter to transmit the data blocks may be fixed, and additional bits to indicate the number N of resource units may not be added to the data groups to be transmitted, and only the bits to indicate the position of at least one resource unit need to be added.

In an embodiment, the transmitter transmits using all available resource units, then additional bits may not be added to the data to be transmitted to indicate the number and positions of resource units.

In the above embodiments, the added bits may be added to the head of the data block D, or may be added to the tail or a designated position of the data block D and distributed according to a designated rule. For example, the added bits are added to the tail of the data block D, there may be the bit group 0, the bit group 1 and the like in the direction from the tail to the head of the data block D.

Similarly, for the manner of bitmap, the bitmap may also be added to a designated position and distributed according to a designated rule. For example, T bits are added to the tail of the data group to be transmitted, and indicate the usage of various available resource units respectively from the tail to the head, or indicate the usage of various available resource units respectively from the head to the tail.

In an embodiment, the data group to be transmitted may include payload data, such as traffic data, a designated message, and the like. The data group to be transmitted may also include identification information of the transmitter, so that the receiver may know which transmitter transmitted the data after decoding the data. The data group to be transmitted may be an uncoded, pre-coded or post-coded data block.

In an embodiment, the data block D may also carry at least one of pilot (e.g., preamble, pilot, reference signal, etc.) information, sequence (e.g., spreading sequence, interleaving sequence, scrambling code sequence, sequence set, etc.) information used on the N resource units. This information is used, after the correct decoding of data on one resource unit by the receiver, for reconstructing the transmission symbol and performing interference cancellation, and for assisting in data decoding on other resource units. Pilot information, sequence information, and the like used on the N resource units may be carried in the data blocks, or a data block transmitted on the n^{th} resource unit may only carry the pilot information, sequence information, and the like used on the current resource unit, where 1<=n<=N. Even through, when decoding is completed on the n^{th} resource unit, it may be used for assisting in decoding the data on the other resource units. In an embodiment, if there is a designated association between the pilot information and the sequence information, only the pilot information or the sequence information may be carried in the data block D.

In an embodiment, bits carrying pilot information, sequence information, and the like may be in the form of a bit group of any embodiment described above, or may be in the form of a bitmap of any embodiment described above.

In an embodiment, bits carrying the pilot information, the sequence information, and the like may be from data bits having the existing meaning in the data for indicating the pilot information, the sequence information, and the like in an implicit manner.

In an embodiment, bits carrying the pilot information, the sequence information, and the like may also be additional added bits. In this embodiment, the transmitter first determines pilot information, sequence information, and the like used on various resource units. For example, the transmitter may determine the pilot information, the sequence information, and the like by random generation or random selection. Then, the transmitter adds additional corresponding bits to the data to be transmitted, to indicate the pilot information, the sequence information, and the like in an explicit manner.

In an embodiment, bit multiplexing may be further considered, that is, some bits simultaneously indicate or carry a plurality of pieces of information.

In an embodiment, the channels determined by the transmitter on the plurality of resource units for transmitting the data blocks are coherent, or the plurality of resource units are located within the coherent bandwidth and/or coherent time range. The transmitter may implement that the channels are coherent by applying certain controls or according to a designated rule.

In this embodiment, the additional bits are added to the data to be transmitted to explicitly indicate the number N of resource units, the information about the position of at least one of the N resource units, and the like, thus facilitating to control the used resource units and make effective indication, but increasing the indication overhead.

In an embodiment, the transmitter transmits data on one or more resource units. In the case where data transmission is performed on a plurality of resource units, the transmitter will transmit M different data blocks on the plurality of resource units, thereby increasing the transmission capacity in the case of contention-based grant-free transmission. For technical details not described in detail in the embodiment, reference may be made to any one of the preceding embodiments. In this embodiment, the transmitter determines the number N of resource units and the corresponding N resource units for transmitting M data blocks, acquires M data blocks to be transmitted on various resource units, and then transmits the M data blocks on the various resource units.

In an embodiment, the transmitter will transmit data blocks D_1, D_2, ..., D_M, respectively, on N resource units, and part of the data in the M data blocks may be the same and referred to as common data. The common data in the M data blocks may carry information about the number N of resource units and the position of at least one of the N resource units, and may further be used for carrying pilot information, sequence information, and the like.

FIG. 4A is a schematic diagram of designated bits according to another embodiment. As shown in FIG. 4A, the transmitter may determine the number N of resource units according to the designated bit group 0 (i.e., a first bit in the designated bits) in the common data, where N is greater than or equal to 1, and may determine the positions of corresponding N resource units according to the designated bit groups 1 to N in the common data, and then the transmitter may transmit data blocks D_1, D_2,..., D_M, respectively, on N resource units.

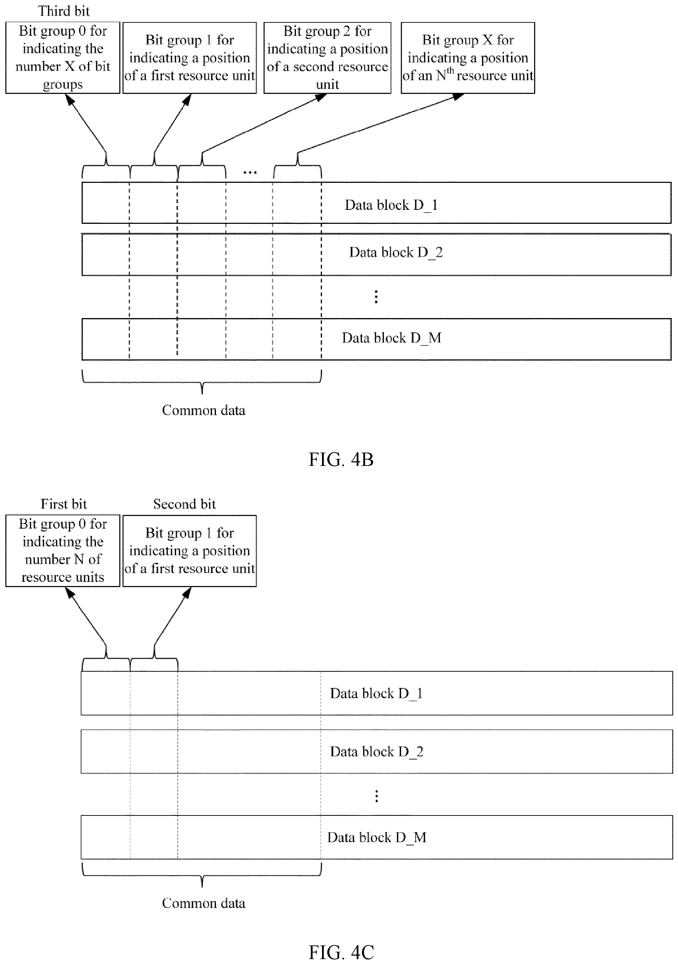

FIG. 4B is a schematic diagram of designated bits according to another embodiment. As shown in FIG. 4B, the transmitter may determine the number X of bit groups according to the designated bit group 0 (i.e., the third bit in the designated bits) in the common data, where X is greater than or equal to 1, may also determine N resource units for transmitting the data blocks according to the designated bit groups 1 to X in the common data. If the bits in one bit group and the bits in a certain previous bit group are the same, that is, the one bit group and the certain previous bit group indicate the same position, the one bit group will not be used for indicating the position information of one resource unit, and the bit group will not be postponed. The bit group X indicates the position of an N^{th} resource unit, and 1<=N<=X.

In this embodiment, the number of resource units and N resource units used for transmitting the data blocks are jointly determined according to the designated bit group 0 and the designated bit groups 1 to X, that is, it is jointly determined the number of resource units used for transmitting the data blocks to be N, and the positions of the N resource units. Then, the transmitter transmits the data blocks D_1, D_2, ..., D_M on the N resource units, respectively.

FIG. 4C is a schematic diagram of designated bits according to another embodiment. As shown in FIG. 4C, the transmitter may determine the number N of resource units for transmitting the data blocks according to the designated bit group 0 (i.e., the first bit in the designated bits) in the common data, where N is greater than or equal to 1, and may determine the position of the first resource unit for transmitting the data blocks according to the designated bit group 1 (i.e., the second bit in the designated bits) in the common data. The transmitter uses successive N resource units starting from this resource unit, or uses successive N resource units having a designated interval starting from this resource unit. The designated interval may be preset, or may be indicated by the designated bit group 2 in the common data. N resource units can be cyclically acquired in the available resource units. Then, the transmitter transmits the data blocks D_1, D_2, ..., D_M on the N resource units, respectively. For the receiver, after the decoding of a certain data block is completed on a certain resource unit, the number N of resource units used by the transmitter and the position of the first resource unit can be obtained, so that the other resource units used by the transmitter can be deduced from the information and the current resource unit, and then the data blocks transmitted on these resource units can be further decoded.

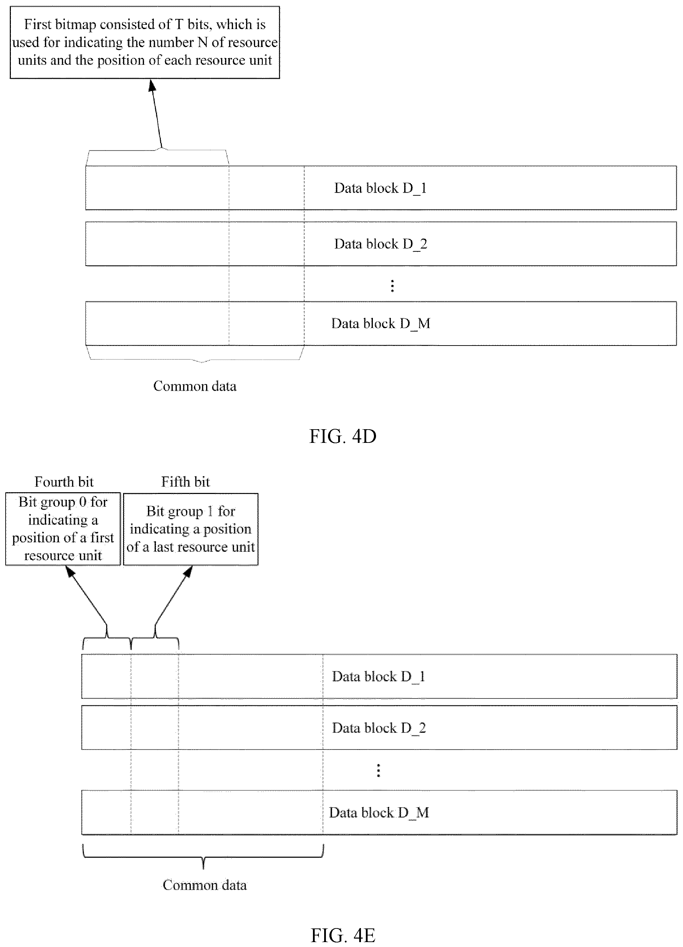

FIG. 4D is a schematic diagram of designated bits according to another embodiment. As shown in FIG. 4D, the transmitter may determine the number N of resource units and the corresponding N resource units for transmitting the data blocks according to the first bitmap in the common data. The bitmap consists of T designated bits in the common data. Then, the transmitter transmits the data blocks D_1, D_2, ..., D_M on the N resource units, respectively.

In an embodiment, in the case where all bits in the bitmap are 0, the number N of resource units and the corresponding N resource units used for transmitting the data blocks may be determined according to a designated rule. In the case where all bits in the bitmap are 1 (or the number of bits of 1 exceed a certain number), if it is not desired to use all resource units (or not desired to use more than a certain number of resource units), the number N of resource units and the corresponding N resource units used for transmitting the data blocks may also be determined according to a designated rule.

FIG. 4E is a schematic diagram of designated bits according to another embodiment. As shown in FIG. 4E, the transmitter may determine the position of the first resource unit for transmitting the data blocks according to the designated bit group 0 (i.e., the fourth bit in the designated bits) in the common data, and may determine the position of the last resource unit for transmitting the data blocks according to the designated bit group 1 (i.e., the fifth bit in the designated bits) in the common data. The N resource units used by the transmitter may be all successive resource units, or resource units with a designated interval, between the first resource unit and the last resource unit.

In an embodiment, the number N of resource units used for transmitting the data blocks may be limited, for example, let N be less than or equal to V, where V may be 1/2, 1/3, etc. of the number of available resource units.

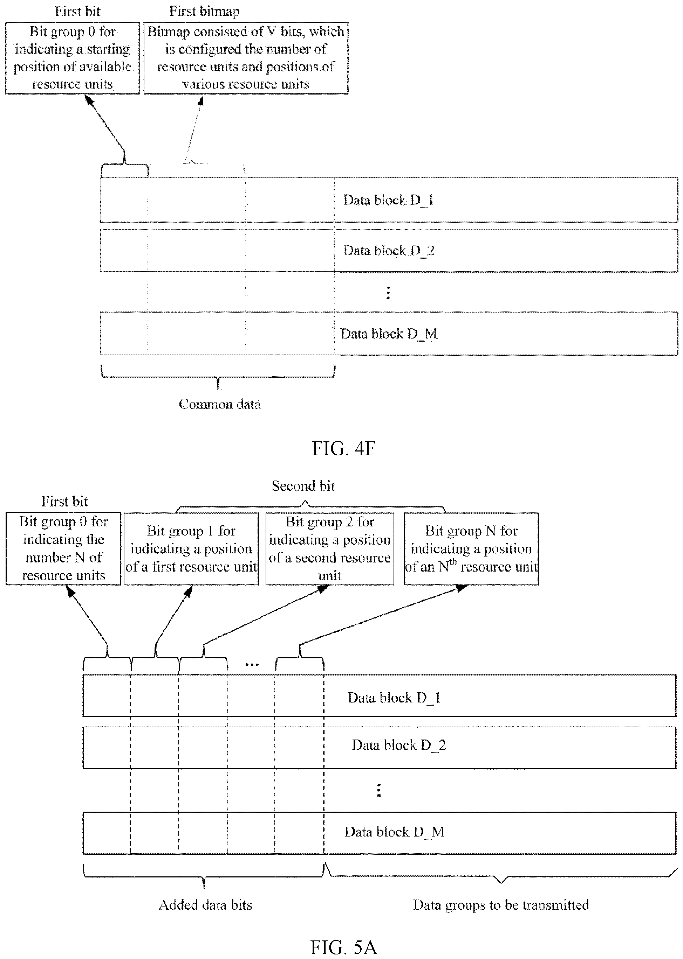

FIG. 4F is a schematic diagram of designated bits according to another embodiment. As shown in FIG. 4F, the transmitter may determine the starting position of the currently available resource units corresponding to the bitmap according to the designated bit group 0 (i.e., the first bit in the designated bits) in the common data, and may determine the number N and the positions of resource units for transmitting the data blocks from the currently available resource units corresponding to the bitmap according to the bitmap (i.e., the first bitmap in the designated bits) composed of V bits in the common data. Then, the transmitter transmits the data blocks D_1, D_2, ..., D_M on the N resource units, respectively.

In an embodiment, the data blocks D_1, D_2, ..., D_M may respectively include payload data, such as traffic data, a designated message, and the like. The payload data included in M data blocks may be different. The M data blocks may also include the identification information of the transmitter, so that the receiver can decode the data and know which transmitter sent the data. The common data in the M data blocks is composed of data that all these data blocks needs to carry. For example, the common data may include identification information of the transmitter, a certain designated message, and the like. The M data blocks may be uncoded, pre-coded or post-coded data blocks.

In an embodiment, in a case where M is equal to N, the transmitter may transmit the data blocks D_1, D_2, ..., D_N on N resource units, respectively, and one data block is transmitted on one resource unit.

In an embodiment, M is less than N, the transmitter may transmit at least one data block on multiple resource units, which is beneficial to improving transmission reliability.

In an embodiment, in a case where M is greater than N, the transmitter may transmit multiple data blocks on at least one resource unit in a superimposed transmission manner.

In an embodiment, the transmitter may first transmit part of the M data blocks on N resource units, and the remaining data blocks may be transmitted at a subsequent transmission moment.

In an embodiment, the data blocks D_1, D_2, ..., D_M may also carry at least one of pilot information, sequence information, etc. used on N resource units or the current transmission resource unit. The pilot information, sequence information and the like may be implicitly indicated by the common data or other data bits having the existing meaning, or may be explicitly indicated by adding additional bits in various data blocks respectively.

In an embodiment, for the data blocks D_1, D_2, ..., D_M, the identification information of transmitter may be carried in only one of the data blocks, and the identification information is not carried in the other data blocks, or partial information of the identification information is carried in the other data blocks, or a small amount of identification check information is carried in the other data blocks. The receiver may consider blind decoding, and respectively attempt to decode data blocks of two sizes.

In an embodiment, payload data may not be carried in the data blocks carrying the identification information of the transmitter, and payload data may be carried in other data blocks. In an embodiment, it is ensured that the sizes of different data blocks are uniform.

In this embodiment, different data are transmitted and the bits of the common data in the plurality of data blocks are used to implicitly indicate the number N of resource units, the information about the position of at least one of the N resource units, and the like, the transmission capacity can be improved, and the indication overhead can be saved.

In an embodiment, the transmitter will transmit data on one or more resource units. In the case where data transmission is performed on the plurality of resource units, the transmitter will transmit M different data blocks on the plurality of resource units, thereby increasing the transmission capacity in the case of contention-based grant-free transmission. In this embodiment, the transmitter first determines the number N of resource units and the corresponding N resource units for transmitting M data blocks. Then, the transmitter acquires the M data blocks to be transmitted on the N resource units, and transmits the M data blocks on the N resource units, respectively.

In an embodiment, the transmitter may randomly select the number N of resource units for transmitting M data blocks from the available resource units, and randomly select the positions or indexes of N resource units.

In an embodiment, assuming that the number of data blocks to be transmitted by the transmitter is N, according to the number N of data blocks, the number of resource units for transmitting the data blocks are determined to be N, and the positions or indexes of N resource units are randomly selected.

FIG. 5A is a schematic diagram of designated bits according to another embodiment. As shown in FIG. 5A, the transmitter first acquires data groups E_1, E_2, ..., E_M to be transmitted which would be transmitted on N resource units, respectively, adds a bit group 0 (i.e., a first bit in the designated bits) to these data groups for indicating the number N of resource units, and adds bit groups 1 to N (i.e., a second bit in the designated bits) to these data groups for indicating the position information of each resource unit, thereby forming data blocks D_1, D_2, ..., D_M. The bits added to various data blocks are the same.

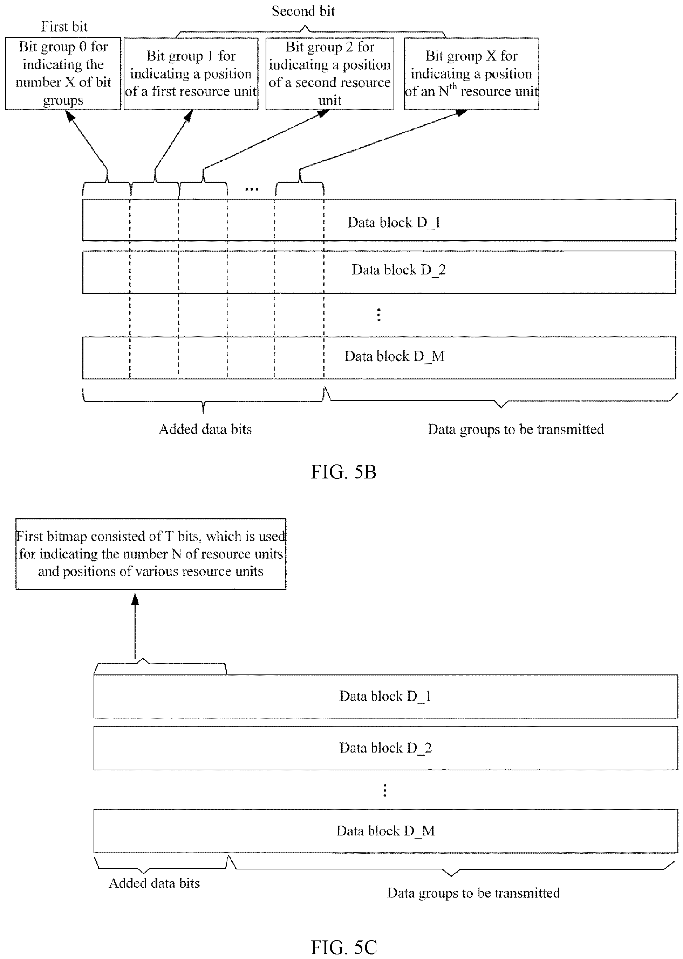

FIG. 5B is a schematic diagram of designated bits according to another embodiment. As shown in FIG. 5B, the transmitter first acquires data groups E_1, E_2, ..., E_M to be transmitted, adds a bit group 0 (i.e., a third bit in the designated bits) to these data groups for indicating the number X of bit groups, and adds bit groups 1 to X to these data groups for indicating the number of the resource units and the position information of at least one resource unit, thereby forming data blocks D_1, D_2, ..., D_M.

FIG. 5C is a schematic diagram of designated bits according to another embodiment. As shown in FIG. 5C, the transmitter acquires data groups E_1, E_2, ..., E_M to be transmitted, and adds the first bitmap to these data groups for indicating the number N of the resource units and the positions of corresponding N resource units, thereby forming data block D_1, D_2, ..., D_M.

In an embodiment, the transmitter may randomly select the number N of resource units from the available resource units, randomly select the position or index of the first resource unit for transmission, and determine successive N resource units starting from the first resource unit or N resource units with a designated interval from the first resource unit as N resource units for transmission.

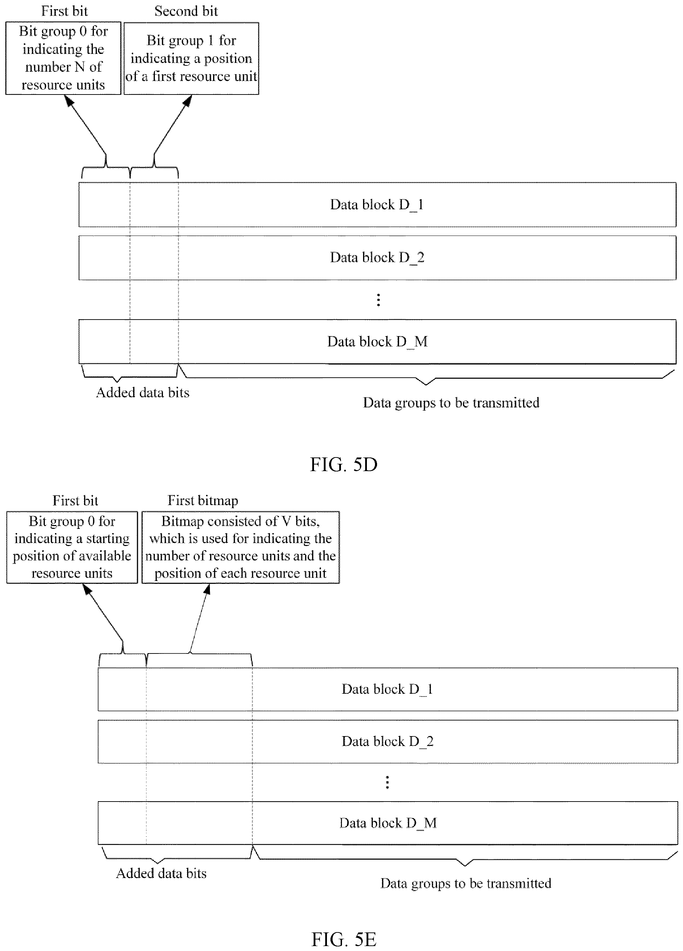

FIG. 5D is a schematic diagram of designated bits according to another embodiment. As shown in FIG. 5D, the transmitter acquires data groups E_1, E_2, ..., E_M to be transmitted, adds a bit group 0 (i.e., a first bit in the designated bits) to these data groups respectively for indicating the number N of resource units, and further adds a bit group 1 (i.e., a second bit in the designated bits) to these data groups respectively for indicating the position information of the first resource unit for transmission, thereby forming data blocks D_1, D_2, ..., D_M.

In this embodiment, the designated interval may be preset, or may be indicated by adding a bit group 2 in these data groups respectively.

For the receiver, after the decoding of a certain data block is completed on a certain resource unit, the number N of resource units used by the transmitter and the position of the first resource unit can be obtained, so that the other resource units used by the transmitter can be deduced from the information and the current resource unit, and then the data blocks transmitted on these resource units can be further decoded.

In an embodiment, the number N of resource units used for transmitting the data blocks may be limited, for example, let N be less than or equal to V, where V may be 1/2, 1/3, etc. of the number of available resource units.

In an embodiment, the transmitter may randomly select one resource unit from the available resource units as a starting resource unit, and take V resource units starting from the starting resource unit and located at designated positions as the currently available resource units. Then, the transmitter determines the number N of resource units for transmitting the data blocks and the corresponding resource units from the currently available resource units.

FIG. 5E is a schematic diagram of designated bits according to another embodiment. As shown in FIG. 5E, the transmitter acquires data groups E_1, E_2, ..., E_M to be transmitted, respectively adds a bit group 0 (i.e., a first bit in the designated bits) to these data groups for indicating the starting position information (i.e., the position information of the first resource unit) of the currently available resource units, and further respectively adds a bitmap (i.e., a first bitmap in the designated bits) to these data groups for indicating the number of resource units for transmitting these data blocks and the position information of each resource unit in the currently available resource units, thereby forming data blocks D_1, D_2, ..., D_M.

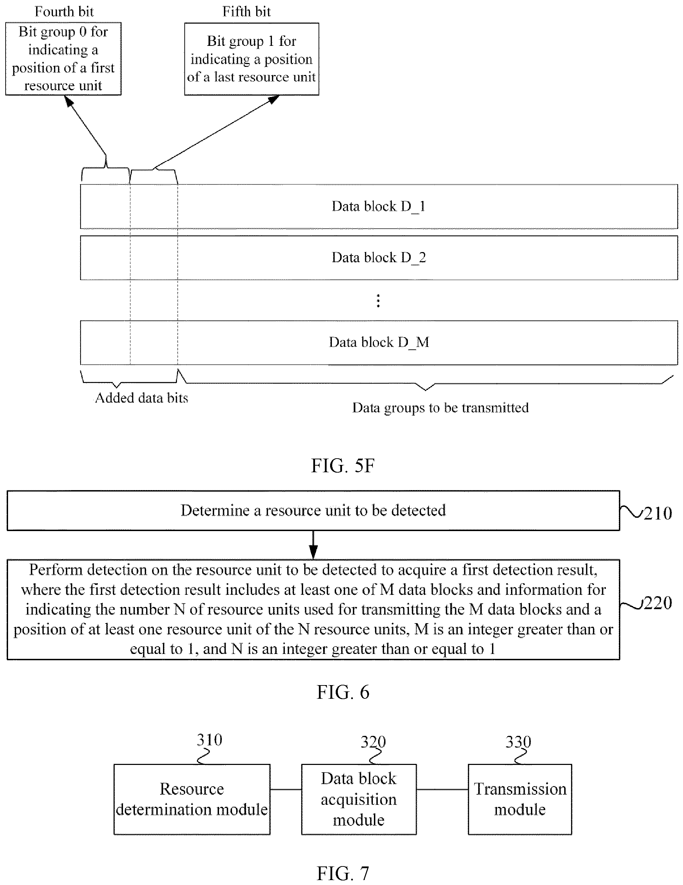

FIG. 5F is a schematic diagram of designated bits according to another embodiment. As shown in FIG. 5F, the transmitter acquires data groups E_1, E_2, ..., E_M to be transmitted, respectively adds a bit group 0 (i.e., a fourth bit in the designated bits) to these data groups for indicating the position information of the first resource unit in N resource units, and further respectively adds a bit group 1 (i.e., a fifth bit in the designated bits) to these data groups for indicating the position information of the last resource unit in N resource units, thereby forming data blocks D_1, D_2, ..., D_M. The N resource units used by the transmitter may be all successive resource units, or resource units with a designated interval, between the first resource unit and the last resource unit.

In an embodiment, the transmitter transmits the data block D_m on the n^{th} resource unit, then, the transmitter may carry only the position information of other resource units other than the n^{th} resource unit in the data block D_M, and no longer carry the position of the currently n^{th} resource unit, so that overhead can be saved, where 1<=n<=N, 1<=m<=M. Specifically, the transmitter acquires data groups E_1, E_2, ..., E_M to be transmitted, respectively adds a bit group 0 to these data groups for indicating the number N or (N-1) (which can be considered to be equivalent) of resource units, and respectively adds (N-1) bit groups to these data groups for indicating the position information of other resource units other than the current resource unit, respectively, thereby forming data blocks D_1, D_2, ..., D_M. In this embodiment, the added bits in various data blocks s are different.

In an embodiment, the number of resource units used by the transmitter to transmit the data blocks may be fixed, then additional bits to indicate the number of resource units may not be added to the data to be transmitted, and only the bits to indicate the positions of the resource units need to be added.

In an embodiment, the transmitter transmits using all available resource units, then additional bits may not be added to the data to be transmitted to indicate the number and positions of resource units.

In an embodiment, the data blocks D_1, D_2, ..., D_M may respectively include payload data, such as traffic data, a designated message, and the like. The payload data included in M data blocks may be different. The M data blocks may also include the identification information of the transmitter, so that the receiver can decode the data and know which transmitter sent the data. The M data blocks may be uncoded, pre-coded or post-coded data blocks.

In an embodiment, in a case where M is equal to N, the transmitter acquires data groups E_1, E_2,..., E_N to be transmitted, respectively adds the above indication bits to these data groups to form data blocks D_1, D_2,..., D_N, and then respectively transmits the N data blocks on N resource units, where one data block is transmitted on one resource unit.

In an embodiment, in a case where M is less than N, the transmitter may transmit at least one data block on multiple resource units, which is beneficial to improving transmission reliability.

In an embodiment, in a case where M is greater than N, the transmitter may transmit multiple data blocks on at least one resource unit in a superimposed transmission manner.

In an embodiment, the transmitter may first transmit part of the M data blocks on N resource unit, and the remaining data blocks may be transmitted at a subsequent transmission moment.

In an embodiment, different indication bits may be added on the basis of one data group to form a plurality of data blocks, and the plurality of data blocks are respectively transmitted on different resource units.

In an embodiment, the data blocks D_1, D_2,..., D_M may also carry at least one of pilot information, sequence information, etc. used on N resource units or the current transmission resource unit. The pilot information, the sequence information, and the like may be indicated in an implicit manner or explicit manner.

In an embodiment, for the data blocks D_1, D_2,..., D_M, the identification information of transmitter may be carried in only one of the data blocks, and the identification information is not carried in the other data blocks, or partial information of the identification information is carried in the other data blocks, or a small amount of identification check information is carried in the other data blocks. The receiver may consider blind decoding, and respectively attempt to decode data blocks of two sizes.

In an embodiment, payload data may not be carried in the data blocks carrying the identification information of the transmitter, and payload data may be carried in other data blocks. In an embodiment, it is ensured that the sizes of different data blocks are uniform.

In this embodiment, different data are transmitted and the additional bits are added to the data to be transmitted to explicitly indicate the number N of resource units, the information about the position of at least one of the N resource units, and the like, which can improve the transmission capacity, is beneficial to control the used resource units and make effective indication, but the indication overhead is increased.

In an embodiment, K transmitters T_1, T_2, ..., T_K respectively transmit data according to the method of any of the above embodiments, where K is an integer greater than or equal to 1.

Each transmitter determines the number N of resource units and the corresponding N resource units used for transmission. For example, the kth transmitter T_k determines the number of resource units used for transmission as N_k, and correspondingly determines the positions or indexes of N_k resource units, where k is an integer greater than or equal to 1 and less than or equal to K. The number of resource units determined by the K transmitters may be the same or different, and the positions of the correspondingly determined resource units may be the same, or partially the same, or different.

Each transmitter also acquires data to be transmitted on the determined resource units and transmits the data on the determined resource units. The data transmitted by each transmitter includes the following information: information used for indicating the number N of resource units and the position of at least one of the N resource units.

In an embodiment, each transmitter further determines at least one of pilot information, sequence information, etc. on each resource unit used for transmission.

In an embodiment, the data transmitted by each transmitter may further include the following information: payload data, such as traffic data, a designated message, and the like.

In an embodiment, the data transmitted by each transmitter may further include the following information: identification information of the transmitter.

In an embodiment, the data transmitted by each transmitter may further include at least one of the following information: pilot information, sequence information, and the like.

In an embodiment, information included in the data transmitted by each transmitter is information used by the transmitter.

In this embodiment, K transmitters respectively transmit data on one or more resource units respective determined by K transmitters. When one transmitter does not collide with other transmitters on a certain resource unit, data transmitted by the one transmitter can be successfully decoded by the receiver with a high probability, furthermore, the receiver can acquire information such as other resource units used by the one transmitter from the decoded data, and process the data on these resource units by using the information (such as at least one of detection, decoding, channel estimation, or interference cancellation), so that the reliability of the data transmission can be improved, the transmission performance of a collision case can be improved, and the performance and capacity of the contention-based grant-free transmission can be improved.

The embodiments of the present application further provide a data transmission method applied to a receiver. The transmitter transmits M data blocks using N resource units and carries information of the number N of resource units and the position of at least one of N resource units in each data block, thus providing a reliable basis for receiver processing. On this basis, the receiver can acquire information such as the resource units used by the transmitter from the decoded data, and can comprehensively process the data on these resource units by using the information, so that the reliability of data transmission can be improved, the transmission performance of a collision case can be improved, and the performance and capacity of the contention-based grant-free transmission can be improved.

FIG. 6 is a flowchart of a data transmission method according to another embodiment. As shown in FIG. 6, the method provided by the present embodiment includes the following.

In 210, a resource unit to be detected is determined.

In 220, detection is performed on the resource unit to be detected to acquire a first detection result, where the first detection result includes at least one of M data blocks, the first detection result includes information indicating a number N of resource units used for transmitting the M data blocks and a position of at least one of N resource units, M is an integer greater than or equal to 1, and N is an integer greater than or equal to 1.

In this embodiment, the receiver may determine the resource unit to be detected in the configured all available resource units, and detect the received symbols on the resource unit to be detected. If at least one of M data blocks can be obtained by detection, and obtain indication information (indicating the number N of resource units used for transmitting the M data blocks and the position of at least one of N resource units), so that detection and processing of N resource units can be continued.

It is to be noted that the operations performed by the receiver correspond to the operations performed by the transmitter in the preceding embodiments. For technical details not described in detail in the embodiment, reference may be made to any one of the preceding embodiments.

In an embodiment, the first detection result further includes at least one of the following information: starting position information of available resource units, quantity information of available resource units, pilot information on at least one of the N resource units, sequence information on at least one of the N resource units, identification information, or payload data.

In this embodiment, the first detection result may include, in addition to indicating the number N of resource units and the position of at least one resource unit, starting position information of available resource units, quantity information of available resource units, and the like, from which the receiver can determine the range of the resource units to be detected; may further include pilot information, sequence information, and the like used by a certain transmitter used on at least one resource unit, from which the receiver can accurately acquire corresponding information used by the transmitter; may further include identification information, from which the receiver can determine which transmitter transmitted data was received; and may further include payload data, and the receiver implements corresponding service processing by decoding and processing.

In an embodiment, 220 includes: acquiring a received symbol on the resource unit to be detected, and detecting the received symbol to acquire the first detection result.

In an embodiment, the method further includes the following.

In 230, according to the information comprised in the first detection result for indicating the number N of resource units used for transmitting the M data blocks and the position of at least one of the N resource units, a resource unit to be processed is determined or the resource unit to be detected is updated.

In this embodiment, the receiver may determine the next resource unit to be detected or the resource unit to be further processed according to the number N of resource units and the position of at least one of N resource units indicated by the first detection result. For the resource units to be processed, the following processing may be performed: detection, reconstruction, channel estimation, interference cancellation.

In an embodiment, the method further includes the following.

In 240, reconstruction is performed to obtain a reconstructed symbol according to the first detection result.

In 250, channel estimation is performed on a channel on at least one of the N resource units to obtain a channel estimation result according to the reconstructed symbol.

In an embodiment, the method further includes 260 and 270.

In 260, interference cancellation is performed on the received symbols on the at least one of the N resource units to obtain an interference-canceled received symbol according to the reconstructed symbol and the channel estimation result.

In 270, the interference-canceled received symbol is detected to acquire a second detection result.

In this embodiment, the received symbol may be the initial received symbol on at least one resource unit, or may be a received symbol without performing interference cancellation. According to the reconstructed symbol and the channel estimation result, interference cancellation can be performed on the received symbol, and further detection can be performed to obtain the second detection result, so that better detection performance can be acquired, and comprehensive and reliable reception processing is achieved.

In an embodiment, the method further includes the following.

In 280, according to the channel estimation result, a received symbol on the at least one of the N resource units is detected to acquire a third detection result.

In this embodiment, the received symbol may be a received symbol without performing the interference cancellation, or may be a symbol (such as a symbol after the previous interference cancellation or a symbol after the current interference cancellation) with performing the interference cancellation. According to the channel estimation result, detection can be further performed on the received symbol of at least one resource unit to obtain the third detection result, so that better detection performance can be acquired, and comprehensive and reliable reception processing is achieved.

In an embodiment, K transmitters respectively transmit a signal on one or more resource units respective determined by K transmitters, and after transmission through the channel, the signal arrive at the receiver, and the receiver receives the signal, detects and decodes the received signal. K is an integer greater than or equal to 1.

In an embodiment, the transmitters may be terminal devices or user devices, and the receiver may be a base station device.

In an embodiment, the receiver determines P available resource units as the resource units to be detected, and performs detection on the P available resource units to acquire Q detection results. P is an integer greater than or equal to 1, and Q is an integer greater than or equal to 0. In an embodiment, Q is related to factors such as the number of transmitters, the resources used by each transmitter, etc. From at least one of Q detection results, the receiver can acquire information on the number N of resource units and the position of at least one of N resource units. The information is information on the number N of resource units and the position of at least one of N resource units used by one transmitter for transmission.

In an embodiment, according to the acquired information, the receiver can determine the number N of resource units and the positions of N resource units used by the transmitter, so as to determine other resource units to be processed for the transmitter, where the processing includes at least one of detection, decoding, channel estimation, interference cancellation, etc.

In an embodiment, the receiver may also acquire the following information: payload data, such as traffic data, a designated message, and the like, from the detection result. In an embodiment, the receiver may also acquire the following information: identification information of a transmitter, from the detection result. In an embodiment, the receiver may also acquire at least one of the following information: pilot information, sequence information, or the like, from the detection result. Some specific details are similar to the above embodiments, which are not repeated herein.

In an embodiment, the receiver may perform blind decoding on the received data, and respectively attempt to decode data blocks of a plurality of sizes. For example, among the plurality of data blocks transmitted by the transmitter, some data blocks carry identification information, other data blocks do not carry identification information or carry partial information of identification information, so that the plurality of data blocks have different sizes.

In an embodiment, the receiver may also reconstruct the symbols transmitted by the transmitter to obtain reconstructed symbols.

In an embodiment, the receiver can also use the reconstructed symbols to perform channel estimation and acquire a channel estimation result on at least one of N resource units. The procedure may at least be used for acquiring the channel estimation result of the resource units corresponding to the current detection result, or may also be used for acquiring the channel estimation result on the other resource units.

In an embodiment, according to the reconstructed symbols and the channel estimation result, the receiver can also perform interference cancellation on the received symbols on at least one of N resource units to acquire updated received symbols. The procedure may at least be used for perform interference cancellation on received symbols on the resource units corresponding to the current detection result, or may be used for perform interference cancellation on received symbols on other resource units.

In an embodiment, the updated received symbols are used by the receiver to perform a new round of detection on the corresponding resource units so as to acquire a new detection result.

In an embodiment, the channel estimation result is used by the receiver to detect the other resource units to be detected so as to acquire a new detection result.

In an embodiment, the receiver does not know the starting position, number or range of available resource units, and the receiver may determine at least one possible available resource unit as a resource unit to be detected, and perform detection on the resource unit to be detected. After the detection result is acquired on a certain resource unit, the receiver may acquire the following information: information about the number N of resource units and the position of at least one of N resource units, and starting position information of the available resource units, from the detection result. In an embodiment, the receiver may also acquire the following information: quantity information of available resource units, from the detection result.

In an embodiment, the receiver iteratively performs at least a portion of the above processing procedure.

It is to be noted that the "first", "second", "third" and the like in the above embodiments are only used for descriptive distinction, and do not emphasize the sequence. In a case, for example, when an iterative detection is performed, it can be collectively referred to as detection results, and can be represented by the same parameter or variable in implementation.

Embodiments of the present application further provide a data transmission apparatus. FIG. 7 is a structural diagram of a data transmission apparatus according to an embodiment. As shown in FIG. 7, the data transmission apparatus includes a resource determination module 310, a data block acquisition module 320 and a transmission module 330.

The resource determination module 310 is configured to determine a number N of resource units and corresponding N resource units, where N is an integer greater than or equal to 1.

The data block acquisition module 320 is configured to acquire M data blocks to be transmitted, M is an integer greater than or equal to 1, where each data block of the M data blocks includes information indicating the number N of resource units and a position of at least one of N resource units.

The transmission module 330 is configured to transmit the M data blocks on the N resource units.

The data transmission apparatus in this embodiment transmits M data blocks using N resource units and carries information about the number N of resource units and the position of at least one of N resource units in each data block, thus providing a reliable basis for receiver processing. On this basis, the receiver can acquire information such as the resource units used by the transmitter from the decoded data, and can comprehensively process the data on these resource units by using the information, so that the reliability of data transmission can be improved, the transmission performance of a collision case can be improved, and the performance and capacity of the contention-based grant-free transmission can be improved.

In an embodiment, the resource determination module 310 is configured to determine, according to the information indicating the number N of resource units and a position of at least one of N resource units included in each data block of the M data blocks, the number N of resource units and the corresponding N resource units.

In an embodiment, the resource determination module 310 is configured to perform one of the following: randomly determine the number N of resource units and randomly select the N resource units; or determine the number N of resource units according to the number M of data blocks to be transmitted, and randomly select the N resource units.

In an embodiment, the data acquisition module 320 is configured to: acquire M data groups, add the information indicating the number N of resource units and the position of at least one of the N resource units to each data group of the M data groups, and generate the M data blocks to be transmitted.

In an embodiment, each data block of the M data blocks includes designated bits which are used for indicating the number N of resource units and the position of at least one of N resource units.

In an embodiment, the designated bits are implicit indication bits or explicit indication bits.

In an embodiment, the designated bits are data bits in common data, and the common data is data included in each data block of the M data blocks.

In an embodiment, the designated bits includes one of: a first bit for indicating the number N of resource units, and a second bit for indicating the position of at least one of N resource units; a third bit for indicating a number X of bit groups, and X bit groups for indicating the position of at least one of N resource units, where X is an integer greater than or equal to 1; a first bitmap for indicating the position of at least one of N resource units; or a fourth bit for indicating a position of a first resource unit of N resource units and a fifth bit for indicating a position of a last resource unit of N resource units.

In an embodiment, the resource determination module 310 is configured to determine the number N of resource units and the corresponding N resource units according to a designated rule in a case where the designated bits include the first bitmap for indicating the position of at least one of N resource units, and the values of the first bitmap are all 0 or the number of values of 1 in the first bitmap exceeds a designated value.

In an embodiment, each data block further includes at least one of the following information: starting position information of available resource units; or quantity information of available resource units.

In an embodiment, the N resource units satisfy at least one of the following: the N resource units are located within a coherent bandwidth range; the N resource units are located within a coherent time range; or channels on the N resource units are coherent.

In an embodiment, each data block further includes at least one of the following information: pilot information used on at least one of the N resource units; or sequence information used on at least one of the N resource units.

In an embodiment, at least one of the M data blocks further includes identification information.

In an embodiment, at least one of the M data blocks further includes payload data.

The data transmission apparatus provided in this embodiment and the data transmission method applied to the transmitter and provided in the preceding embodiments belong to the same concept. For technical details not described in detail in this embodiment, reference may be made to any one of the preceding embodiments. The embodiment has the same beneficial effects as the performed data transmission method applied to the transmitter.

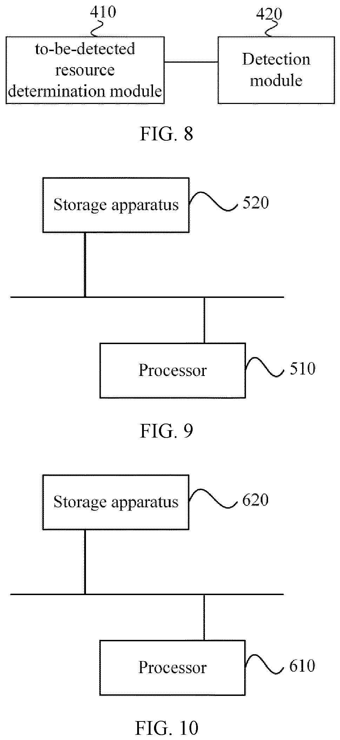

Embodiments of the present application further provide a data transmission apparatus. FIG. 8 is a structural diagram of a data transmission apparatus according to another embodiment. As shown in FIG. 8, the data transmission apparatus includes a to-be-detected resource determination module 410 and a detection module 420.

The to-be-detected resource determination module 410 is configured to determine a resource unit to be detected.

The detection module 420 is configured to perform detection on the resource unit to be detected to acquire a first detection result, where the first detection result includes at least one of M data blocks, the first detection result includes information indicating the number N of resource units used for transmitting the M data blocks and a position of at least one of N resource units, M is an integer greater than or equal to 1, and N is an integer greater than or equal to 1.

The data transmission apparatus in this embodiment transmits M data blocks using N resource units and carries information about the number N of resource units and the position of at least one of N resource units in each data block, and the receiver can acquire information such as the resource units used by the transmitter from the decoded data, and can comprehensively process the data on these resource units by using the information, so that the reliability of data transmission can be improved, the transmission performance of a collision case can be improved, and the performance and capacity of the contention-based grant-free transmission can be improved.

In an embodiment, the first detection result further includes at least one of the following information: starting position information of available resource units, quantity information of available resource units, pilot information on at least one of the N resource units, sequence information on at least one of the N resource units, identification information, or payload data.

In an embodiment, the detection module 420 is configured to acquire a received symbol on the resource unit to be detected, and detect the received symbol to acquire the first detection result.

In an embodiment, the apparatus further includes the following.

The to-be-detected resource determination module 410 is configured to determine a resource unit to be processed or update the resource unit to be detected according to the information included in the first detection result for indicating the number N of resource units used for transmitting the M data blocks and the position of at least one of N resource units.

In an embodiment, the apparatus further includes a reconstruction module and a channel estimation module.

The reconstruction module is configured to perform, according to the first detection result, reconstruction to obtain a reconstructed symbol.

The channel estimation module is configured to perform, according to the reconstructed symbol, channel estimation on a channel on at least one of N resource units to obtain a channel estimation result.

In an embodiment, the apparatus further includes an interference cancellation module.

The interference cancellation module is configured to perform, according to the reconstructed symbol and the channel estimation result, interference cancellation on the received symbol on the at least one of N resource units to obtain an interference-canceled received symbol.

The detection module 420 is configured to detect the interference-canceled received symbol to acquire a second detection result.

In an embodiment, the detection module 420 is further configured to detect, according to the channel estimation result, a received symbol on the at least one of the N resource units to acquire a third detection result.

The data transmission apparatus provided in this embodiment and the data transmission method applied to the receiver and provided in the preceding embodiments belong to the same concept. For technical details not described in detail in this embodiment, reference may be made to any one of the preceding embodiments. The embodiment has the same beneficial effects as the performed data transmission method applied to the receiver.

Embodiments of the present application further provide a transmitter. The data transmission method applied to the transmitter in the above embodiments may be performed by the data transmission apparatus. The data transmission apparatus may be implemented by software and/or hardware and integrated in the transmitter. The transmitter may be a terminal.

FIG. 9 is a schematic diagram of a hardware structure of a transmitter according to an embodiment. As shown in FIG. 9, the transmitter provided in this embodiment includes a processor 510 and a storage apparatus 520. The transmitter may include one or more processors 510. One processor 510 is shown as an example in FIG. 9. The processor 510 and the storage apparatus 520 in the transmitter may be connected via a bus or in other manners. The connection via a bus is shown as an example in FIG. 9.

One or more programs are executed by one or more processors 510 to cause the one or more processors 510 to implement the data transmission method applied to a transmitter in any one of the preceding embodiments.

The storage apparatus 520 in the transmitter, as a computer-readable storage medium, may be configured to store one or more programs which may be software programs, computer-executable programs and modules, such as program instructions/modules (for example, modules in the data transmission apparatus, which include a resource determination module 310, a data block acquisition module 320 and a transmission module 330, as shown in FIG. 7) corresponding to the data transmission method in embodiments of the present disclosure. The processor 510 executes software programs, instructions, and modules stored in the storage apparatus 520 to perform various function applications and data processing of the transmitter, that is, to implement the data transmission method applied to the transmitter in the preceding method embodiments.

The storage apparatus 520 mainly includes a program storage region and a data storage region. The program storage region may store an operating system and an application program required by at least one function. The data storage region may store data (such as data blocks, information indicating the number N of resource units and the position of at least one of N resource units in the preceding embodiments) created based on use of the device. Additionally, the storage apparatus 520 may include a high speed random-access memory and may further include a non-volatile memory, such as at least one magnetic disk memory, a flash memory or another non-volatile solid-state memory. In some examples, the storage apparatus 520 may further include memories which are remotely disposed respect to the processor 510, and these remote memories may be connected to the transmitter via a network. Examples of the above network include, but are not limited to, the Internet, an intranet, a local area network, a mobile communication network and combinations thereof.

When one or more programs included in the above transmitter are executed by the one or more processor 510, the transmitter implements the following operations: determining the number N of resource units and corresponding N resource units, where N is an integer greater than or equal to 1; acquiring M data blocks to be transmitted, M is an integer greater than or equal to 1, where each data block of the M data blocks includes information indicating the number N of resource units and a position of at least one of N resource units; and transmitting the M data blocks on the N resource units.

The transmitter provided in this embodiment and the data transmission method applied to the transmitter and provided in the preceding embodiments belong to the same concept. For technical details not described in detail in this embodiment, reference may be made to any one of the preceding embodiments. The embodiment has the same beneficial effects as the performed data transmission method applied to the transmitter.

Embodiments of the present application further provide a receiver. The data transmission method applied to the receiver in the above embodiments may be performed by the data transmission apparatus. The data transmission apparatus may be implemented by software and/or hardware and integrated in the receiver. The receiver may be a base station.

FIG. 10 is a schematic diagram of a hardware structure of a receiver according to an embodiment. As shown in FIG. 10, the receiver provided in the present embodiment includes a processor 610 and a storage apparatus 620. The receiver may include one or more processors 610. One processor 610 is shown as an example in FIG. 10. The processor 610 and the storage apparatus 620 in the receiver may be connected via a bus or in other manners. The connection via a bus is shown as an example in FIG. 10.

One or more programs are executed by one or more processors 610 to cause the one or more processors 610 to implement the data transmission method applied to a receiver in any one of the preceding embodiments.

The storage apparatus 620 in the receiver, as a computer-readable storage medium, may be configured to store one or more programs which may be software programs, computer-executable programs and modules, such as program instructions/modules (for example, modules in the data transmission apparatus, which include a to-be-detected resource module 410 and a detection module 420, as shown in FIG. 8) corresponding to the data transmission method in embodiments of the present disclosure. The processor 610 executes software programs, instructions, and modules stored in the storage apparatus 620 to perform various function applications and data processing of the receiver, that is, to implement the data transmission method applied to the receiver in the preceding method embodiments.

The storage apparatus 620 mainly includes a program storage region and a data storage region. The program storage region may store an operating system and an application program required by at least one function. The data storage region may store data (such as data blocks and the first detection result in the preceding embodiments) created based on use of the equipment. Additionally, the storage apparatus 620 may include a high speed random-access memory and may further include a non-volatile memory, such as at least one magnetic disk memory, a flash memory or another non-volatile solid-state memory. In some examples, the storage apparatus 620 may further include memories which are remotely disposed respect to the processor 610, and these remote memories may be connected to the receiver via a network. Examples of the above network include, but are not limited to, the Internet, an intranet, a local area network, a mobile communication network and combinations thereof.

When one or more programs included in the above receiver are executed by the one or more processor 610, the receiver implements the following operations: determining a resource unit to be detected; and performing detection on the resource unit to be detected to acquire a first detection result, where the first detection result includes at least one of M data blocks, the first detection result includes information indicating the number N of resource units used for transmitting the M data blocks and a position of at least one of N resource units, M is an integer greater than or equal to 1, and N is an integer greater than or equal to 1.

The receiver provided in this embodiment and the data transmission method applied to the receiver and provided in the preceding embodiments belong to the same concept. For technical details not described in detail in this embodiment, reference may be made to any one of the preceding embodiments. The embodiment has the same beneficial effects as the performed data transmission method applied to the receiver.

Embodiments of the present application further provide a storage medium containing computer-executable instructions which, when executed by a computer processor, causes the computer processor to perform a data transmission method. The method includes determining the number N of resource units and corresponding N resource units, where N is an integer greater than or equal to 1; acquiring M data blocks to be transmitted, M is an integer greater than or equal to 1, where each data block of the M data blocks includes information indicating the number N of resource units and a position of at least one of N resource units; and transmitting the M data blocks on the N resource units.

Alternatively, the method includes determining a resource unit to be detected; and performing detection on the resource unit to be detected to acquire a first detection result, where the first detection result includes at least one of M data blocks, the first detection result includes information indicating a number N of resource units used for transmitting the M data blocks and a position of at least one of N resource units, M is an integer greater than or equal to 1, and N is an integer greater than or equal to 1.

From the preceding description of embodiments, it is apparent to those skilled in the art that the present application may be implemented by use of software and general-purpose hardware or may be implemented by hardware. Based on this understanding, the technical solutions of the present application may be embodied in the form of a software product. The computer software product may be stored in a computer-readable storage medium, such as a floppy disk, a read-only memory (ROM), a random-access memory (RAM), a flash memory, a hard disk, or an optical disk of a computer and includes multiple instructions for causing a computer device (which may be a personal computer, a server, or a network device) to perform the method in any embodiment of the present application.

The preceding are only example embodiments of the present application and not intended to limit the scope of the present application.

A block diagram of any logic flow among the drawings of the present application may represent program processes, may represent interconnected logic circuits, modules and functions, or may represent a combination of program processes with logic circuits, modules and functions. Computer programs may be stored in the memory. The memory may be of any type suitable to the local technical environment and may be implemented by using any suitable data storage technology. For example, the memory may be, but is not limited to, a read-only memory (ROM), a random access memory (RAM), an optical memory apparatus and system (digital video disc (DVD) or compact disc (CD)), or the like. Computer-readable media may include non-transitory storage media. A data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A data transmission method, applied to a transmitter, comprising:
determining a number N of resource units and corresponding N resource units, wherein N is an integer greater than or equal to 1;
acquiring M data blocks to be transmitted, M is an integer greater than or equal to 1, wherein each data block of the M data blocks comprises information for indicating the number N of resource units and a position of at least one of the N resource units; and
transmitting the M data blocks on the N resource units.

2. The method of claim 1, wherein determining the number N of resource units and the corresponding N resource units, comprises:
according to the information for indicating the number N of resource units and the position of at least one of the N resource units comprised in each data block of the M data blocks, determining the number N of resource units and the corresponding N resource units.

3. The method of claim 1, wherein determining the number N of resource units and the corresponding N resource units, comprises one of:
randomly determining the number N of resource units and randomly selecting the N resource units; or
according to the number M of data blocks to be transmitted, determining the number N of resource units, and randomly selecting the N resource units.

4. The method of claim 1, wherein acquiring the M data blocks to be transmitted, comprises:
acquiring M data groups, adding the information for indicating the number N of resource units and the position of at least one of the N resource units to each data group of the M data groups to generate the M data blocks to be transmitted.

5. The method of claim 1, wherein each data block of the M data blocks comprises designated bits, and the designated bits are used for indicating the number N of resource units and the position of at least one of the N resource units.

6. The method of claim 5, wherein the designated bits are implicit indication bits or explicit indication bits.

7. The method of claim 5, wherein the designated bits are data bits in common data, and the common data is data comprised in each data block of the M data blocks.

8. The method of claim 5, wherein the designated bits comprise one of:
a first bit for indicating the number N of resource units, and a second bit for indicating the position of at least one of the N resource units;
a third bit for indicating a number X of bit groups, and X bit groups for indicating the position of at least one of the N resource units, wherein X is an integer greater than or equal to 1;
a first bitmap for indicating the position of at least one of the N resource units; or
a fourth bit for indicating a position of a first resource unit of the N resource units and a fifth bit for indicating a position of a last resource unit of the N resource units.

9. The method of claim 8, wherein determining the number N of resource units and the corresponding N resource units, comprises:
in a case where the designated bits comprise the first bitmap for indicating the position of at least one of the N resource units, and values of bits of the first bitmap are all 0 or a number of bits with a value of 1 in the first bitmap exceeds a designated value, determining the number N of resource units and the corresponding N resource units according to a designated rule.

10. The method of claim 1, wherein each data block further comprises at least one of the following information:
starting position information of available resource units; or
quantity information of available resource units.

11. The method of claim 1, wherein the N resource units satisfy at least one of:
the N resource units are located within a coherent bandwidth range;
the N resource units are located within a coherent time range; or
channels on the N resource units are coherent.

12. The method of claim 1, wherein each data block further comprises at least one of the following information:
pilot information used on at least one of the N resource units; or
sequence information used on at least one of the N resource units.

13. The method of claim 1, wherein at least one of the M data blocks further comprises identification information.

14. The method of claim 1, wherein at least one of the M data blocks further comprises payload data.

15. A data transmission method, applied to a receiver, comprising:
determining a resource unit to be detected; and
performing detection on the resource unit to be detected to acquire a first detection result, wherein the first detection result comprises at least one of M data blocks and information for indicating a number N of resource units used for transmitting the M data blocks and a position of at least one of N resource units, M is an integer greater than or equal to 1, and N is an integer greater than or equal to 1.

16. The method of claim 15, wherein the first detection result further comprises at least one of the following information:
starting position information of available resource units;
quantity information of available resource units;
pilot information on at least one of the N resource units;
sequence information on at least one of the N resource units;
identification information; or
payload data.

17. The method of claim 15, wherein performing detection on the resource unit to be detected to acquire the first detection result, comprises:
acquiring a received symbol on the resource unit to be detected; and
detecting the received symbol to acquire the first detection result.

18. The method of claim 15, further comprising:
determining a resource unit to be processed or updating the resource unit to be detected according to the information included in the first detection result for indicating the number N of resource units used for transmitting the M data blocks and the position of at least one of N resource units.

19. The method of claim 15, further comprising:
performing, according to the first detection result, reconstruction to obtain a reconstructed symbol; and
performing, according to the reconstructed symbol, channel estimation for a channel on at least one of the N resource units to obtain a channel estimation result.

20. The method of claim 19, further comprising:
performing, according to the reconstructed symbol and the channel estimation result, interference cancellation on a received symbol on at least one of the N resource units to obtain an interference-canceled received symbol; and
detecting the interference-canceled received symbol to acquire a second detection result.

21. The method of claim 19, further comprising:
detecting, according to the channel estimation result, a received symbol on at least one of the N resource units to acquire a third detection result.

22. A data transmission apparatus, comprising:
a resource determination module, which is configured to determine a number N of resource units and corresponding N resource units, wherein N is an integer greater than or equal to 1;
a data block acquisition module, which is configured to acquire M data blocks to be transmitted, M is an integer greater than or equal to 1, wherein each data block of the M data blocks comprises information for indicating the number N of resource units and a position of at least one of the N resource units; and
a transmission module, which is configured to transmit the M data blocks on the N resource units.

23. A data transmission apparatus, comprising:
a to-be-detected resource determination module, which is configured to determine a resource unit to be detected; and
a detection module, which is configured to perform detection on the resource unit to be detected to acquire a first detection result, wherein the first detection result comprises at least one of M data blocks and information for indicating a number N of resource units used for transmitting the M data blocks and a position of at least one of N resource units, M is an integer greater than or equal to 1, and N is an integer greater than or equal to 1.

24. A transmitter, comprising:
at least one processor; and
a storage apparatus, which is configured to store at least one program;
wherein when executed by the at least one processor, the at least one program causes the at least one processor to perform the data transmission method according to any one of claims 1 to 14.

25. A receiver, comprising:
at least one processor; and
a storage apparatus, which is configured to store at least one program;
wherein when executed by the at least one processor, the at least one program causes the at least one processor to perform the data transmission method according to any one of claims 15 to 21.

26. A computer-readable storage medium storing a computer program which, when executed by a processor, causes the processor to perform the data transmission method according to any one of claims 1 to 14 or the data transmission method according to any one of claims 15 to 21.
